# EUROPÄISCHE PATENTANMELDUNG

(11) **EP 2 586 638 A2**
(43) Veröffentlichungstag der Anmeldung: **01.05.2013**
(21) Anmeldenummer: 12187064.6
(22) Anmeldetag: 03.10.2012
(51) Int. Cl.: B60J 10/02, B65D 57/00, B65D 81/02

(54) **Kederleiste zum Schutz einer Profilleiste**

(30) Priorität: 25.10.2011 DE 102011054801
(71) Anmelder: Elkamet Kunststofftechnik GmbH, 35216 Biedenkopf (DE)
(72) Erfinder: Deußen, Dr. Martin, 35039 Marburg (DE); Platt, Wolfgang, 35216 Biedenkopf (DE)
(74) Vertreter: Dreiss

(57) **Zusammenfassung**

Die Erfindung betrifft eine Kederleiste (1), die vorübergehend in eine in einer Profilleiste (100) ausgebildete Rastausnehmung (101) einsetzbar ist, wobei die Profilleiste zum Verbinden einer Fahrzeugscheibe (110) mit einer Wasserkastenabdeckung vorgesehen ist, und wobei die Wasserkastenabdeckung eine Rippe aufweist, die nach dem Entfernen der Kederleiste kraft- und/oder formschlüssig in der Rastausnehmung festlegbar ist, wobei die Kederleiste einen Kernabschnitt (10) und einen Überstandabschnitt (20) aufweist, wobei der Kernabschnitt innerhalb der Rastausnehmung kraft- und/oder formschlüssig festlegbar ist, wobei der Überstandabschnitt aus der Rastausnehmung der Profilleiste herausragt, wenn die Kederleiste in die Rastausnehmung eingesetzt ist. Derartige Kederleisten lassen sich schwer entfernen. Aufgabe der Erfindung ist es das Entfernen zu optimieren. Die Erfindung sieht daher vor, dass der Überstandabschnitt einen Koppelbereich (21) für ein Werkzeug (200) aufweist, wobei sich der Koppelbereich zumindest abschnittsweise über die Länge des Überstandabschnitts erstreckt.

## Beschreibung

Die Erfindung betrifft eine Kederleiste gemäß dem Oberbegriff von Anspruch 1 sowie ein Werkzeug zur Entfernung der Kederleiste aus einer Profilleiste nach Anspruch 12.

Kederleisten dienen dem Schutz von Profilleisten, die mit einer Rastnut oder einer Rastausnehmung versehen sind. Die Kederleiste wird hierzu vorübergehend mit einem Kernabschnitt in die Rastnut oder die Rastausnehmung eingesetzt, so dass diese während der Herstellung, der weiteren Be- oder Verarbeitung und/oder während des Transports nicht verformt oder gar beschädigt werden kann.

Ein wichtiger Anwendungsfall für solche Kederleisten sind Profilleisten, die zum Verbinden einer Wasserkastenabdeckung mit einer Fahrzeugscheibe vorgesehen sind. Eine solche Profilleiste wird gewöhnlich am unteren Rand der Fahrzeugscheibe befestigt. Sie bildet entlang dieser meist gebogenen Scheibenkante eine Rastausnehmung oder stellt eine solche zur Verfügung.

Die Rastausnehmung ist zur kraft- und/oder formschlüssigen Aufnahme einer Rippe der Wasserkastenabdeckung ausgebildet.

Notwendig ist die Kederleiste deshalb, weil die im Extrusionsverfahren hergestellten Profilleisten vor ihrer Befestigung an der Fahrzeugscheibe, die üblicherweise durch Ankleben und/oder Aufklemmen erfolgt, durch Biegen dem gebogenen Verlauf der Scheibenkante angepasst werden müssen. Dabei kann sich die Rastausnehmung der Profilleiste verformen. Mit Hilfe der Kederleiste, die meist einen Kernabschnitt aus einem Material wie Polyethylen aufweist, wird die Geometrie des Querschnitts der Profilleiste geschützt und die Wasserkastenabdeckung kann auch nach der Formanpassung der Profilleiste stets zuverlässig und präzise in die Rastausnehmung der Profilleiste eingerastet werden.

Hinzu kommt, dass die Profilleiste bereits vor dem Einbau der Fahrzeugscheibe, insbesondere bei einem Zulieferer, mit dieser verbunden wird. Die Scheiben werden wegen ihrer Sprödigkeit in der Regel aufrecht transportiert, und die Profilleisten dienen dabei oft als Auflagekante. Aufgrund des Gewichts der Fahrzeugscheibe kann sich die Profilleiste und mithin deren Rastausnehmung verformen, so dass später beim Einrasten der Wasserkastenabdeckung Probleme auftreten. Die Kederleiste hingegen schützt auch hier die Rastausnehmung vor einer Verformung oder gar Beschädigung.

Nach dem Entfernen der Kederleiste aus der Rastausnehmung der Profilleiste kann die Rippe der Wasserkastenabdeckung problemlos in die Rastausnehmung eingesetzt werden. Letztere erstreckt sich hierbei - ebenso wie die Rippe der Wasserkastenabdeckung - entlang der Profilleiste und weist eine U-förmige Grundform auf. Auf diese Weise und ggf. durch ein zusätzliches Dichtungselement zwischen der Fahrzeugscheibe und der Wasserkastenabdeckung wird eine dichte aber lösbare Verbindung geschaffen.

Eine bekannte Ausführungsform einer Kederleiste ist in WO 2006 002 891 A2 offenbart. Sie hat einen Kernabschnitt und einen Überstandabschnitt. Wenn die Kederleiste in die Rastausnehmung eingesetzt ist, liegt der Kernabschnitt innerhalb der Rastausnehmung der Profilleiste und ist kraft- und/oder formschlüssig darin festgelegt. Der Überstandabschnitt hingegen ragt aus der Rastausnehmung der Profilleiste heraus. Er ist in einem rechten Winkel zum Kernabschnitt abgewinkelt und schützt zusätzlich eine ansonsten freiliegende Kante der Profilleiste. Der Querschnitt der Kederleiste hat mithin näherungsweise eine L-Form.

Eine andere Ausführungsform einer Kederleiste ist in DE 10 2006 038 013 A1 dargestellt. Bei dieser Leiste ist der Überstandabschnitt ebenfalls in einem rechten Winkel zum Kernabschnitt angeordnet, zeigt jedoch in zwei Richtungen von letzterem. Der Querschnitt der Kederleiste ist so näherungsweise T-förmig.

Problematisch bei diesen Ausgestaltungen ist, dass sich die Kederleisten nur unergonomisch und mühsam aus der Rastausnehmung der Profilleiste entfernen lassen, weil letztere meist einen Hinterschnitt ausbilden. Dadurch ist der Kernabschnitt in der Profilleiste eingerastet und der notwendige Kraftaufwand zum Herausziehen der Kederleiste aus dem Profilelement ist entsprechend groß. Keine der vorbekannten Ausführungsformen einer Kederleiste ist jedoch für eine ausführende Person einfach greifbar. Der Arbeitsschritt zur Entfernung der Kederleiste dauert daher unterschiedlich lang und ist für die Handmuskulatur ermüdend. Die Taktung an der Fertigungsstraße muss auf den längsten möglichen Zeitraum eingestellt werden. Außerdem kommt es bei der Entfernung regelmäßig zu Beschädigungen der Profilleiste und umliegender Bauteile, zum Beispiel durch den Einsatz ungeeigneter Hilfsmittel wie Schraubendreher, Zangen oder dergleichen. Schließlich besteht ein Verletzungsrisiko für die ausführende Person, beispielsweise durch Abbrechen eines Fingernagels.

Um dem zu begegnen, sieht EP 2 253 556 A1 vor, eine als linearer Körper ausgebildete provisorische Kederleiste mit mindestens einer Grifflasche zu versehen, die sich quer zum Körper erstreckt und die aus der Rastausnehmung der Profilleiste hinausragt, wenn der Kernabschnitt in der Rastausnehmung der Profilleiste untergebracht ist.

Nachteilig bei dieser Grifflasche ist jedoch, dass diese häufig beim Einbau einer Glasscheibe in ein Fahrzeug eingeklemmt wird. Deshalb wird die Grifflasche oftmals mit einem Klebestreifen auf der Windschutzscheibe fixiert. Vor dem Entfernen der Kederleiste muss dieser Klebestreifen wieder entfernt werden, damit die Grifflasche zugänglich ist. Eine ungünstige Anordnung des Klebestreifens führt zu einem mühseligen Ablösen des Klebestreifens. Insgesamt wird der gewünschte Effekt der Zeiteinsparung hierdurch höchstens teilweise realisiert. Außerdem verbleiben auf der Windschutzscheibe Rückstände des Klebestreifens, die im Fertigungsprozess aufwendig entfernt werden müssen.

Weitere technische und wirtschaftliche Nachteile dieser Grifflasche ergeben sich durch die aufwändigen Vorrichtungen und Prozesse, die bei der Herstellung der Profilleisten zusätzlich erforderlich sind, um die Kederleiste mit der Grifflasche zu versehen und diese anschließend in die Profilleiste einzubringen.

Ziel der Erfindung ist es, diese und weitere Nachteile des Standes der Technik zu überwinden und eine Kederleiste zu schaffen, die mit einfachen Mitteln kostengünstig aufgebaut ist und die schnell, leicht und zuverlässig aus dem Profilelement entfernt werden kann, ohne eine Verletzungsgefahr für die ausführende Person und ohne Beschädigungen und Nacharbeiten zu verursachen. Dabei soll sie dennoch geeignet sein, eine Profilleiste zuverlässig vor Schäden zu schützen.

Hauptmerkmale der Erfindung sind im kennzeichnenden Teil der Ansprüche 1 und 12 angegeben. Ausgestaltungen sind Gegenstand der Ansprüche 2 bis 11 und 13 bis 22.

Die Erfindung betrifft eine Kederleiste, die vorübergehend in eine in einer Profilleiste ausgebildete Rastausnehmung einsetzbar ist, wobei die Profilleiste zum Verbinden einer Fahrzeugscheibe mit einer Wasserkastenabdeckung vorgesehen ist, und wobei die Wasserkastenabdeckung eine Rippe aufweist, die nach dem Entfernen der Kederleiste kraft- und/oder formschlüssig in der Rastausnehmung festlegbar ist, wobei die Kederleiste einen Kernabschnitt und einen Überstandabschnitt aufweist, wobei der Kernabschnitt innerhalb der Rastausnehmung kraft- und/oder formschlüssig festlegbar ist, wobei der Überstandabschnitt aus der Rastausnehmung der Profilleiste herausragt, wenn die Kederleiste in die Rastausnehmung eingesetzt ist, wobei der Überstandabschnitt einen Koppelbereich für ein Werkzeug aufweist, wobei sich der Koppelbereich zumindest abschnittsweise über die Länge des Überstandabschnitts erstreckt.

Durch den Koppelbereich ist es möglich, einen relativ kurzen Überstand des Überstandabschnitts vorzusehen. Ein solcher kann mit einem erfindungsgemäßen Werkzeug dennoch einfach gegriffen werden. Das Werkzeug ist unabhängig von der Kederleiste ergonomisch auslegbar. Dementsprechend kann die Kederleiste unter Zuhilfenahme des Werkzeugs einfach, schnell, leicht und zuverlässig entfernt werden. Aufgrund des vorgesehen Koppelbereichs ist dies auch ohne Verletzungsgefahr oder Beschädigungen möglich. Nacharbeiten werden vermieden und die Taktzeit am Fertigungsband ist besonders gering. Dabei bietet die Erfindung zuverlässigen Schutz vor Beschädigungen der Profilleiste.

Eine Weiterbildung der Erfindung sieht vor, dass der Kernabschnitt ein erster linearer Körper ist. Ein solcher ist geeignet, eine Profilleiste besonders gut von innen zu stützen. Insbesondere kann der lineare Körper hierbei über seine gesamte Länge in der Rastausnehmung an der Profilleiste anliegen. Dabei ist die Linearität hinsichtlich der Grundform des Körpers zu betrachten. Der lineare Körper kann durch Biegung vor allem in der Einbausituation in der Profilleiste eine von der Linearität abweichende Form aufweisen. Insbesondere kommen Ausbildungen des linearen Körpers als Band, Stab, Schaft oder Schnur in Betracht. Herstellbar ist der lineare Körper vor allem durch eine kostengünstige Extrusion. Hierfür ist nur ein Werkzeug für verschieden ausgebildete Profilleisten notwendig, sofern deren Rastnuten oder Rastausnehmungen identische oder zumindest hinreichend ähnliche Querschnitte aufweisen. Entsprechend der Länge der Profilleiste kann der lineare Körper, bzw. der Kernabschnitt der Kederleiste abgelängt werden.

Gemäß einer erfindungsgemäßen Variante weist der Kernabschnitt einen Querschnitt mit einer Rastvertiefung zur Aufnahme eines Rastelements der Profilleiste auf. Ein solches Rastelement ist meist ohnehin für die Verbindung des Wasserkastens mit der Windschutzscheibe vorgesehen. Das Rastelement sitzt dabei in der Rastausnehmung der Profilleiste angeordnet, bzw. wird durch die Rastausnehmung selbst oder durch die sie bildenden Elemente des Profilquerschnitts gebildet. Durch die Rastvertiefung im Kernabschnitt der Kederleiste wird das Rastelement besser vor Schäden geschützt. Zusätzlich ist die Kederleiste durch das Rastelement in der Profilleiste festgelegt. Sie sitzt somit fest in der Rastausnehmung und kann weder verrutschen noch herausfallen. Der Schutz der Profilleiste vor Schäden ist so sicher gewährleistet.

Die Rastvertiefung sollte hierbei in Entnahmerichtung seitlich am Kernabschnitt angeordnet sein, wobei die Entnahmerichtung quer zur Profilleiste ausgerichtet und aus der Rastausnehmung heraus zeigend ist. Die Rastausnehmung kann so einen Hinterschnitt quer zur Entnahmerichtung ausbilden. Der Hinterschnitt korrespondiert dann entsprechend mit dem Rastelement in der Rastausnehmung der Profilleiste.

Ferner sieht eine Ausgestaltung der Erfindung vor, dass der Überstandabschnitt ein zweiter linearer Körper ist. Ein solcher kann sich parallel zum Kernabschnitt über dessen gesamte Länge erstrecken. Die Linearität ist wiederum hinsichtlich der Grundform des zweiten linearen Körpers zu betrachten. Der zweite lineare Körper kann durch Biegung vor allem in der Einbausituation des Kernabschnitts der Kederleiste in der Profilleiste eine von der Linearität abweichende Form aufweisen. Insbesondere kommen Ausbildungen des zweiten linearen Körpers als Band, Stab, Schaft oder Schnur in Betracht. Herstellbar ist der zweite lineare Körper vor allem durch eine kostengünstige Extrusion. Hierfür ist nur ein Werkzeug für verschieden ausgebildete Profilleisten notwendig, da der Überstandabschnitt insbesondere auf das Werkzeug zur Entfernung der Kederleiste sowie die räumlichen Gegebenheiten im Einbauzustand von Profilleiste, Kederleiste und Fahrzeugscheibe abgestimmt sein muss, wobei die Details der Profilleiste in der Regel unberücksichtigt bleiben können. Entsprechend der Länge der Profilleiste kann der zweite lineare Körper, bzw. der Überstandabschnitt abgelängt werden. Dies ermöglicht auch, dass sich der Koppelbereich über die gesamte Länge der Kederleiste erstreckt. Je nach Montagesituation und Präferenz der ausführenden Person ist die Kederleiste somit an unterschiedlichen Positionen entlang der Profilleiste bzw. Fahrzeugscheibenkante mit dem Werkzeug koppel- und dadurch entnehmbar. Besonders bevorzugt sind der erste lineare Körper und der zweite lineare Körper einteilig ausgebildet. Hierfür können der erste lineare Körper und der zweite lineare Körper gemeinsam extrudiert sein.

Gemäß einer Präzisierung des erfindungsgemäßen Koppelbereichs weist dieser einen Querschnitt mit einer ersten Vertiefung zur Kopplung mit dem Werkzeug auf. In eine solche Vertiefung kann das Werkzeug eingreifen. Entsprechend ist die Kopplung zwischen Werkzeug und Kederleiste geeignet, größere Kräfte problemlos zu übertragen. Die Vertiefung kann dabei auch als durchgängiges Loch ausgebildet sein, was insbesondere bei der Fertigung des Überstandabschnitts als Spritzgussteil problemlos möglich ist. Bei der Fertigung als Extrusionsprofil sollte dies jedoch vermieden werden, da durchgängige Löcher nur durch Nacharbeit einbringbar sind.

Besonders bevorzugt weist die erste Vertiefung einen Hinterschnitt quer zur Entnahmerichtung auf. Demgemäß kann ein Werkzeug diesen Hinterschnitt hintergreifen und ist gegen ein Abrutschen gesichert. Die ergonomische Handhabung des Werkzeugs wird so erheblich verbessert, da die ausführende Person beispielsweise keine großen Klemmkräfte erzeugen muss, um die Kederleiste sicher an ihrem Koppelbereich zu greifen.

Eine Variante der Erfindung sieht weiter vor, dass die erste Vertiefung in Entnahmerichtung seitlich am Koppelbereich angeordnet ist. Ein passendes Werkzeug kann den Koppelbereich somit umgreifen und in die seitlich ausgebildete erste Vertiefung eingreifen. Das Werkzeug wird so sicher in der Ausnehmung gehalten und kann nicht abrutschen.

Zusätzlich zur ersten Vertiefung weist der Koppelbereich gemäß einer Ausprägung der Erfindung einen Querschnitt mit einer zweiten Vertiefung zur Kopplung mit dem Werkzeug auf. Hierdurch erhöht sich die Übertragbarkeit der vom Werkzeug aufzubringenden Entnahmekraft. Insbesondere kann das Werkzeug hierfür in beide Vertiefungen eingreifen. Auch die zweite Vertiefung sollte einen Hinterschnitt quer zur Entnahmerichtung aufweisen. Diesen kann das Werkzeug wiederum hintergreifen. Bevorzugt ist die zweite Vertiefung auch in Entnahmerichtung seitlich am Koppelbereich angeordnet. Dabei ist es möglich, die beiden Vertiefungen in der Entnahmerichtung benachbart anzuordnen. Folglich würden die beiden Vertiefungen durch eine zwischen ihnen liegende Erhebung getrennt.

Als besonders Vorteilhaft erweist es sich jedoch, die zweite Vertiefung der ersten Vertiefung gegenüberliegend anzuordnen. Das Werkzeug wird dann bei der Entnahme der Kederleiste aus der Profilleiste von beiden Seiten in die beiden Vertiefungen eingeführt/eingerastet. Die Kopplung zwischen Werkzeug und Koppelbereich des Überstandabschnitts der Kederleiste ist so besonders stark. Auch Kederleisten mit festem Sitz in der Profilleiste können so entfernt werden. Zudem erfolgt ein gleichmäßiger Zug bei der Entfernung, bei dem die Gefahr eines Abreißens des Koppelbereichs von der Kederleiste durch partielle Überdehnungen in der Kederleiste vermieden wird.

Durch die gegenüberliegende Anordnung der ersten Vertiefung und der zweiten Vertiefung kann der Koppelbereich einen pilzkopfförmigen Querschnitt aufweisen. Die Pilzform bildet in Entnahmerichtung der Kederleiste Einführschrägen für ein Werkzeug aus. Ist das Werkzeug und/oder der Koppelbereich elastisch ausgebildet, kann das Werkzeug über die Einführschrägen einfach und schnell auf den Koppelbereich aufgeschoben werden. Anschließend rastet es in den Vertiefungen ein und die Entnahme der Kederleiste aus der Profilleiste kann erfolgen.

Eine andere Variante der Erfindung sieht vor, dass die erste Vertiefung in Entnahmerichtung stirnseitig am Koppelbereich angeordnet ist. Auch mit dieser ersten Vertiefung ist ein Werkzeug in Eingriff bringbar. Es kann insbesondere aus der Entnahmerichtung in die Vertiefung hineingeführt werden.

Gemäß einer Fortbildung dieser Variante umfasst die erste Vertiefung einen Querschnitt mit einer schlitzförmigen Eingriffsöffnung und mit einem dahinterliegenden, quer zur Entnahmerichtung und relativ zur Eingriffsöffnung aufgeweiteten Hohlraum. Das Werkzeug kann somit durch die enge Eingriffsöffnung eingeführt werden, wobei der aufgeweitete Hohlraum einen Hinterschnitt quer zur Entnahmerichtung ausbildet. Mit diesem kann das Werkzeug eine Kopplung ausbilden und die Kederleiste kann aus der Profilleiste gezogen werden. Die Eingriffsöffnung bildet hierbei bevorzugt Einführschrägen aus, um das Einführen des Werkzeugs zu vereinfachen. Zur Herstellung der Kopplung ist das Werkzeug oder der Koppelbereich elastisch auszubilden. Alternativ kann das Werkzeug gespreizt oder nach dem Einführen um 90°gedreht werden. Hierdurch entsteht eine große Hinterschneidung und die Kopplung kann große Zugkräfte vom Werkzeug auf die Kederleiste übertragen. Ein weiterer Vorteil ist der besonders klein ausbildbare Überstandabschnitt der Kederleiste. Dies ist dadurch erreichbar, dass der Hohlraum bis in den Kernabschnitt ausbildbar ist. Im Idealfall, insbesondere bei relativ breiten Kederleisten, liegt selbst die Eingriffsöffnung im Bereich des Kernabschnitts und der Überstandabschnitt hat annährend einen Überstand von null relativ zur Profilleiste.

Weiterhin betrifft die Erfindung ein Werkzeug zur Entfernung einer Kederleiste aus einer Rastausnehmung einer Profilleiste, wobei die Kederleiste vorübergehend in die in der Profilleiste ausgebildete Rastausnehmung einsetzbar ist, wobei die Profilleiste zum Verbinden einer Fahrzeugscheibe mit einer Wasserkastenabdeckung vorgesehen ist, und wobei die Wasserkastenabdeckung eine Rippe aufweist, die nach dem Entfernen der Kederleiste kraft- und/oder formschlüssig in der Rastausnehmung festlegbar ist, wobei die Kederleiste einen Kernabschnitt und einen Überstandabschnitt aufweist, wobei der Kernabschnitt innerhalb der Rastausnehmung kraft- und/oder formschlüssig festlegbar ist, wobei der Überstandabschnitt aus der Rastausnehmung der Profilleiste herausragt, wenn die Kederleiste in die Rastausnehmung eingesetzt ist, wobei der Überstandabschnitt einen Koppelbereich für das Werkzeug aufweist, wobei sich der Koppelbereich zumindest abschnittsweise über die Länge des Überstandabschnitts erstreckt, und wobei das Werkzeug einen Schaftbereich und einen Koppelbereich aufweist, wobei der Koppelbereich des Werkzeugs mit dem Koppelbereich der Kederleiste bei deren Entfernung aus der Rastausnehmung mittels einer Zugkraft in einer Zugrichtung koppelbar ist.

Mit diesem Werkzeug kann die Kederleiste einfach, schnell, leicht und zuverlässig aus der Profilleiste herausgezogen werden. Beschädigungen an der Profilleiste oder umliegenden Teilen werden vermieden. Nacharbeiten fallen dementsprechend nicht an. Der Schaftbereich bildet einen Handgriff für eine Person aus. Er ist dabei ergonomisch und unabhängig von der Kederleiste ausbildbar. Der Koppelbereich der Kederleiste kann zudem klein ausgebildet sein, da das Werkzeug dennoch zuverlässig mit dem Koppelbereich gekoppelt werden kann. Der insgesamt kompakte Überstandabschnitt muss auch nicht wie im Stand der Technik gesichert werden, da er bei der Montage nicht zwischen andere Bauteile gerät.

Das erfindungsgemäße Werkzeug kann für eine Vielzahl an Entnahmen von Kederleisten aus Profilleisten ausgebildet sein. Alternativ sind auch Einmal-Werkzeuge vorsehbar, die nach der Entnahme einer einzigen Kederleiste entsorgt werden. Denkbar ist auch eine Kombination dieser Varianten, bspw. durch Ausbildung eines dauerhaften Schaftbereichs und einmal zu verwendender Koppelbereiche, z.B. Wechselspitzen.

Um Schäden bei dem Hantieren mit dem Werkzeug auszuschließen, sieht eine Fortbildung des Werkzeugs dessen Ausbildung aus Kunststoff vor. Kunststoff ist leicht und kann bzgl. seiner mechanischen Eigenschaften und seiner Härte so ausgewählt oder eingestellt werden, dass das Werkzeug seine Funktion sicher erfüllen kann. Gleichzeitig werden insbesondere Kratzer oder andere Beschädigungen auf Scheiben, lackierten Teilen oder Beschädigungen der Profilleiste vermieden. Hierzu trägt auch bei, dass weiche Kunststoffteile keine harten scharfen Kanten oder Grate aufweisen. Dabei kann das Werkzeug aus elastischen Materialien/Kunststoffen hergestellt sein, so dass es sich bei dem Ankoppeln an den Koppelbereich der Kederleiste elastisch verformt. Hierdurch sind große Hinterschnitte realisierbar, um die Zugkraft vom Werkzeug auf die Kederleiste zu übertragen. Generell kommen als Kunststoffe Thermoplaste oder Duroplaste mit oder ohne Füllstoffe in Frage. Geeignete Materialien sind PE (Polyethylen), PP (Polypropylen), PA6 (Polycaprolactam), PA12 (Polylauryllactam), PA6.6 (Polyhexamethylenadipamid), ABS (Acrylnitril-Butadien-Styrol), PVC (Polyvinylchlorid), PVC/ABS, SAN (Styrol/Acrylnitril), PC (Polycarbonat), PMMA (Polymethylmethacrylat), et cetera.

Grundsätzlich ist es möglich, das Werkzeug mit Reibflächen auszustatten und eine Zugkraft über die Reibflächen auf den Koppelbereich des Überstandabschnitts der Kederleiste aufzubringen. Gemäß einer bevorzugten Ausführung der Erfindung weist der Koppelbereich des Werkzeugs jedoch ein erstes Koppelmittel auf. Dieses Koppelmittel kann zur Zugkraftübertragung vom Werkzeug auf die Kederleiste mit dem Koppelbereich der selbigen in Eingriff gebracht werden, insbesondere mit Vertiefungen des Koppelbereichs der Kederleiste. Zur optimalen Kraftübertragung sollte das erste Koppelmittel des Koppelbereichs des Werkzeugs hierbei einen ersten Hinterschnitt quer zur Zugrichtung ausbilden. Der Hinterschnitt ermöglicht eine starke Kopplung zwischen dem Koppelbereich des Überstandabschnitts der Kederleiste und dem Koppelbereich des Werkzeugs.

Eine ergänzende Fassung des erfindungsgemäßen Werkzeugs sieht vor, dass dessen Koppelbereich ein zweites Koppelmittel aufweist. Entsprechend der Ausgestaltung des Koppelbereichs des Überstandbereichs der Kederleiste können die Koppelmittel so positioniert werden, dass eine besonders starke Kopplung herstellbar ist. Idealerweise bildet auch das zweite Koppelmittel des Koppelbereichs des Werkzeugs einen zweiten Hinterschnitt quer zur Zugrichtung aus. Hierdurch wird der Kraftschluss verbessert und die Kopplung kann große Kräfte übertragen. Entsprechend rutscht das Werkzeug nicht ab.

Besonders günstig erweist es sich, das zweite Koppelmittel dem ersten Koppelmittel gegenüberliegend anzuordnen. Hierdurch wirken sie in entgegengesetzter Richtung und unterstützen sich optimal. Die vom Werkzeug auf die Kederleiste übertragbaren Kräfte sind entsprechend hoch.

Ferner betrifft eine besondere Ausgestaltung des Werkzeugs ein Betätigungsmittel, wobei das erste Koppelmittel und das zweite Koppelmittel durch dieses relativ zueinander bewegbar sind. Hierdurch kann ein Spreizmechanismus oder ein Klemmmechanismus ausgebildet sein. Ein in eine stirnseitig zur Entnahmerichtung am Koppelbereich des Überstandabschnitts der Kederleiste angeordnete Öffnung eingeführtes Werkzeug wird durch die Spreizwirkung erheblich verbessert. Es sind zudem auch bei festeren Materialien der Koppelbereiche relativ große Hinterschneidungen möglich, wodurch die Kraftübertragung verbessert ist. Eine Klemmung bietet sich insbesondere dann an, wenn die beiden Koppelmittel auf zwei Seiten des Koppelbereichs des Überstandabschnitts der Kederleiste angeordnet sind. Entsprechend einer Zange können die Koppelmittel des Werkzeugs den Koppelbereich des Überstandabschnitts der Kederleiste umfassen und fixieren. Das Betätigungsmittel beaufschlagt dabei die Koppelmittel am Koppelbereich des Werkzeugs relativ zum Koppelbereich des Überstandabschnitts der Kederleiste mit einer Klemmkraft. Neben der Ausbildung als Zange oder Schere kommt auch eine Ausbildung des Betätigungsmittels als Pinzette in Betracht.

In einer näheren Ausgestaltung ist das Betätigungsmittel durch eine Feder ausgebildet. In Kombination mit Einführschrägen an wenigstens einem der Koppelbereiche kann das Werkzeug dann ohne weiteres auf den Koppelbereich des Überstandabschnitts der Kederleiste aufgeschoben werden und die Koppelmittel rasten aufgrund der Federkraftbeaufschlagung ein. Alternativ oder ergänzend zum Betätigungsmittel kann der Schaftbereich entsprechend einer Schere oder einer Zange ausgebildet sein. Dies ist auch automatisiert als robotergeführtes Werkzeug ausbildbar.

Eine besonders gut greifende Weiterbildung des Werkzeugs sieht vor, dass zwischen dem ersten Koppelmittel und dem zweiten Koppelmittel stirnseitig zur Zugrichtung eine schlitzförmige Aufnahmeöffnung mit einem dahinterliegenden, sowie quer zur Zugrichtung und relativ zur Aufnahmeöffnung aufgeweiteten Aufnahmeraum ausgebildet ist, wobei der Aufnahmeraum in einer Richtung quer zur Zugrichtung offen ausgebildet ist.

Um die Aufnahmeöffnung leicht über den Koppelbereich des Überstandabschnitts der Kederleiste aufschieben zu können, sollte die Aufnahmeöffnung wenigstens eine Einführschräge aufweisen. Optimaler Weise liegen sich zwei Einführschrägen gegenüber, wobei die Aufnahmeöffnung zwischen den Einführschrägen ausgebildet ist.

Eine andere Variante des erfindungsgemäßen Werkzeugs sieht dahingegen vor, dass das erste Koppelmittel und das zweite Koppelmittel rückseitig zueinander ausgerichtet sind und der Koppelbereich des Werkzeugs eine T-Form oder eine Pilzform ausbildet. Ein solches Werkzeug eignet sich insbesondere um mit einer stirnseitigen Öffnung des Koppelbereichs des Überstandbereichs der Kederleiste in Eingriff gebracht zu werden.

Die Pilzform ist besonders vorteilhaft, da sie Einführschrägen ausbildet, wodurch das Einführen des Werkzeugs in eine stirnseitige Öffnung des Koppelbereichs des Überstandbereichs der Kederleiste besonders einfach ist. Optimaler Weise verfügt auch diese stirnseitige Öffnung der Kederleiste über Einführschrägen.

Um die Kederleiste aus der Profilleiste zu entfernen, sollte die Zugrichtung des Werkzeugs parallel zur Entnahmerichtung der Kederleiste ausgerichtet sein. Dies obliegt jedoch bei handgeführten Werkzeugen im Wesentlichen der Handhabung durch die ausführende Person. Der Griffbereich sollte dann so ausgebildet sein, dass die Person bei einer solchen Zugrichtung entspannt und mit geringem Kraftaufwand arbeiten kann.

Der Überstandabschnitt verfügt in einer besonderen Ausführungsform der Kederleiste neben dem Koppelbereich zusätzlich über einen Abdeckbereich. Mit dem Abdeckbereich können außenliegende Bereiche der Profilleiste oder angrenzende Teile abgedeckt und geschützt werden. Hierfür sollte der Abdeckbereich an der Profilleiste und/oder den angrenzenden Teilen anliegen.

Aufgrund der definierten Lage des Koppelbereichs relativ zur Fahrzeugscheibe ist das Werkzeug auch automatisiert ausbildbar. Insbesondere als robotergeführtes Werkzeug. Das Werkzeug kann hierbei mit in den Roboter der Fahrzeugscheibenmontage integriert werden. Nach dem Einsetzen der Scheibe in die Karosserie kann der Roboter die Kederleiste mit Hilfe des Werkzeugs aus der Profilleiste entfernen. Anschließend könnte die Kederleiste in einen Abwurfbehälter fallen gelassen, bzw. in diesem abgelegt werden. Die Fertigungskosten sind so besonders gering. Am Roboter können auch mehrere Werkzeuge zur Kopplung an unterschiedlichen Positionen mit der Kederleiste vorgesehen sein, um eine unkontrollierte Bewegung der Kederleiste bei deren Entnahme zu verhindern.

Weitere Merkmale, Einzelheiten und Vorteile der Erfindung ergeben sich aus dem Wortlaut der Ansprüche sowie aus der folgenden Beschreibung von Ausführungsbeispielen anhand der Zeichnungen. Es zeigen:
- Fig. 1: einen Querschnitt durch eine Profilleiste mit einer Kederleiste, wobei die Kederleiste einen Koppelbereich mit einem Querschnitt mit zwei gegenüberliegenden Vertiefungen zur Kopplung mit einem Werkzeug aufweist;
- Fig. 2: einen Querschnitt einer Kederleiste;
- Fig. 3: ein Werkzeug zur Entfernung einer Kederleiste;
- Fig. 4: einen Querschnitt durch eine Profilleiste mit einer Kederleiste, wobei die Kederleiste einen Koppelbereich mit einem Querschnitt mit zwei gegenüberliegenden Vertiefungen zur Kopplung mit einem Werkzeug aufweist, und wobei ein Überstandbereich der Kederleiste einen Abdeckbereich umfasst;
- Fig. 5: einen Querschnitt durch eine Profilleiste mit einer Kederleiste, wobei die Kederleiste einen Koppelbereich mit einem Querschnitt mit einer ersten Vertiefung zur Kopplung mit einem Werkzeug aufweist;
- Fig. 6: einen Querschnitt durch eine Profilleiste mit einer Kederleiste, wobei die Kederleiste einen Koppelbereich mit einem Querschnitt mit einer ersten Vertiefung zur Kopplung mit einem Werkzeug aufweist, wobei das Werkzeug ein Betätigungsmittel hat;
- Fig. 7: einen Querschnitt durch eine Profilleiste mit einer Kederleiste, wobei die Kederleiste einen Koppelbereich ohne Vertiefungen zur Kopplung mit einem Werkzeug aufweist;
- Fig. 8: einen Querschnitt durch eine Profilleiste mit einer Kederleiste, wobei die Kederleiste einen Koppelbereich ohne Vertiefungen zur Kopplung mit einem dargestellten Werkzeug aufweist;
- Fig. 9: einen Querschnitt durch eine Profilleiste mit einer Kederleiste, wobei die Kederleiste einen Koppelbereich mit einem Querschnitt mit einer stirnseitigen Vertiefungen zur Kopplung mit einem Werkzeug aufweist;
- Fig. 10: einen Querschnitt durch eine Profilleiste mit einer Kederleiste, wobei die Kederleiste einen Koppelbereich mit einem Querschnitt mit einer stirnseitigen Vertiefungen zur Kopplung mit einem Werkzeug aufweist, wobei das Werkzeug ein Betätigungsmittel umfasst;
- Fig. 11: ein Werkzeug; und
- Fig. 12a, 12b: das Werkzeug aus Fig. 11 bei der Herstellung der Kopplung mit der Kederleiste.

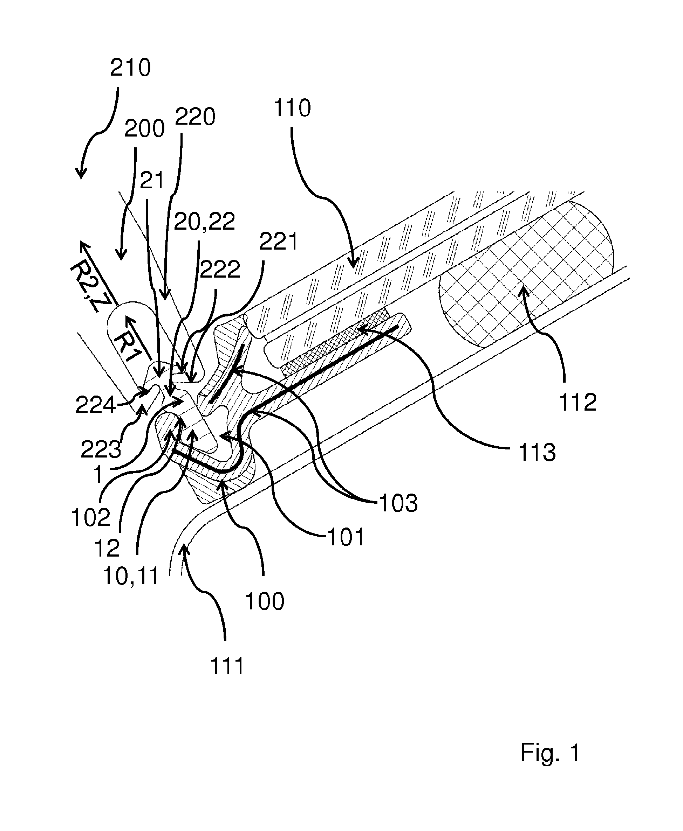

Fig. 1 zeigt einen Querschnitt durch eine Profilleiste 100 mit einer Kederleiste 1, wobei die Kederleiste 1 einen Koppelbereich 21 mit einem Querschnitt mit zwei gegenüberliegenden Vertiefungen 23, 27 zur Kopplung mit einem Werkzeug 200 aufweist. Die Kederleiste 1 ist vorübergehend in eine in der Profilleiste 100 ausgebildete Rastausnehmung 101 eingesetzt. Dabei ist die Profilleiste 100 zum Verbinden einer Fahrzeugscheibe 110 mit einer Wasserkastenabdeckung vorgesehen, wobei die Wasserkastenabdeckung eine Rippe aufweist, die nach dem Entfernen der Kederleiste 1 kraft- und/oder formschlüssig in der Rastausnehmung 101 festlegbar ist.

Wie dargestellt, ist die Profilleiste 100 aus unterschiedlichen Materialien hergestellt. Insbesondere in Richtung einer Karosserie 111 und der Fahrzeugscheibe 110 sind weichere Bereiche vorgesehen, mit denen sich die Profilleiste 100 abstützt. Zudem verfügt die Profilleiste 100 über innenliegende Versteifungselemente 103. Die gezeigte Profilleiste 100 ist in einem Coextrusionsverfahren hergestellt. Über ein Befestigungsmittel 112 ist die Profilleiste 100 an der Fahrzeugscheibe 110 festgelegt. Diese ist insbesondere als Verklebung, bzw. Kleberaupe ausgebildet. Die Fahrzeugscheibe 110 wiederum ist über ein Haltemittel 113 mit der Karosserie 111 gekoppelt. Dieses Haltemittel 113 ist als zweiseitiger Klebestreifen ausgeführt.

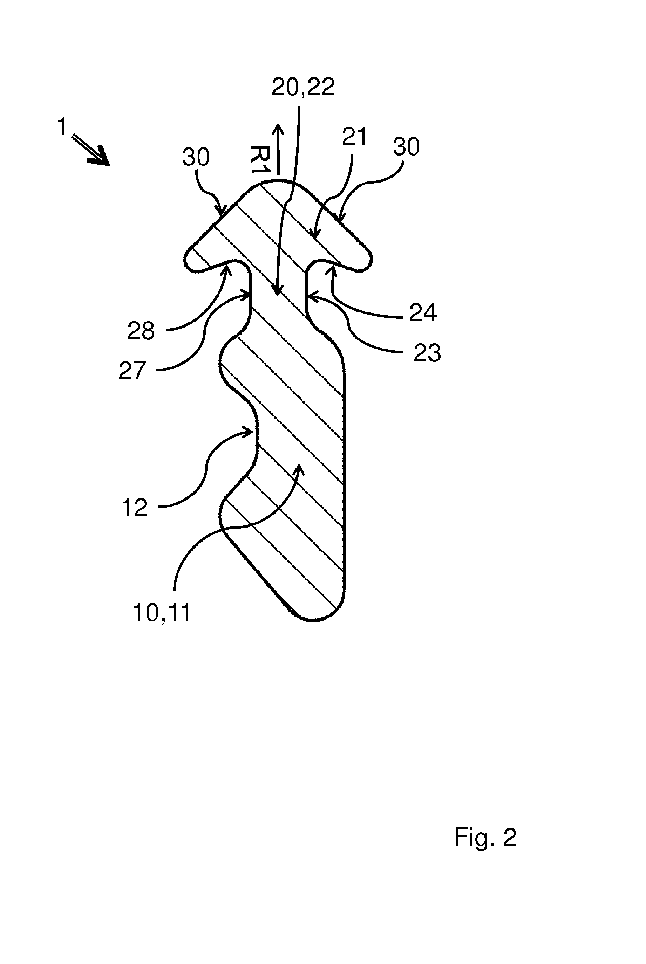

Wie man in Fig. 1 und einer Detailansicht der Kederleiste 1 gemäß Fig. 2 erkennt, weist die Kederleiste 1 einen Kernabschnitt 10 und einen Überstandabschnitt 20 auf, wobei der Kernabschnitt 10 innerhalb der Rastausnehmung 101 kraft- und/oder formschlüssig festgelegt ist, und wobei der Überstandabschnitt 20 aus der Rastausnehmung 101 der Profilleiste 100 herausragt, wenn die Kederleiste 1 wie in Fig. 1 in die Rastausnehmung 101 eingesetzt ist.

Der Kernabschnitt 10 der Kederleiste 1 hat einen Querschnitt mit einer Rastvertiefung 12 zur Aufnahme eines Rastelements 102 der Profilleiste 100. Dieses Rastelement 102 ist in der Rastausnehmung 101 der Profilleiste 100 angeordnet, bzw. wird von der Profilleiste 100 selbst ausgebildet. Hierdurch ist die Kederleiste 1 in der Profilleiste 100 festgelegt. Durch eine elastische Verformung der Kederleiste 1 und/oder der Profilleiste 100 kann die Kederleiste 1 in einer Entnahmerichtung R1 aus der Profilleiste 100 entnommen/gezogen werden. Insbesondere ist die Rastvertiefung 12 in Entnahmerichtung R1 seitlich am Kernabschnitt 10 der Kederleiste 1 angeordnet, wobei die Entnahmerichtung R1 quer zur Profilleiste 100 ausgerichtet und aus der Rastausnehmung 101 heraus zeigend ist. Der Kernabschnitt 10 der Kederleiste 1 ist als ein erster linearer Körper 11 ausgebildet. Hierfür wurde er extrudiert. Anschließend wurde er entsprechend der geforderten Länge abgelängt.

Weiterhin hat der Überstandabschnitt 20 einen Koppelbereich 21 für ein Werkzeug 200. Dieser erstreckt sich über die gesamte Länge des Überstandabschnitts 20. Hierfür ist der Überstandabschnitt 20 als zweiter linearer Körper 22 ausgebildet. Er erstreckt sich über die gesamte Länge der Kederleiste 1. Auch der zweite lineare Körper 22 ist im Extrusionsverfahren hergestellt. Dabei sind der zweite lineare Körper 22 und der erste lineare Körper 11 einteilig ausgebildet, insbesondere gemeinsam extrudiert. Der Koppelbereich 21 erstreckt sich daher entsprechend des Überstandabschnitts 20 über die gesamte Länge der Kederleiste 1.

Zur Herstellung einer Kopplung mit dem Werkzeug 200 verfügt der Koppelbereich 21 des Überstandabschnitts 20 der Kederleiste 1 über einen Querschnitt mit einer ersten Vertiefung 23. Diese bildet einen Hinterschnitt 24 quer zur Entnahmerichtung R1 aus. Hierfür ist die erste Vertiefung 23 in Entnahmerichtung R1 seitlich am Koppelbereich 21 angeordnet.

Zusätzlich hat der Koppelbereich 21 einen Querschnitt mit einer zweiten Vertiefung 27 zur Kopplung mit dem Werkzeug 200. Auch diese zweite Vertiefung 27 weist einen Hinterschnitt 28 quer zur Entnahmerichtung R1 auf. Wie die erste Vertiefung 23 ist die zweite Vertiefung 27 in Entnahmerichtung R1 seitlich am Koppelbereich 21 angeordnet. Man erkennt in den Fig. 1 und 2, dass sich die erste Vertiefung 23 und die zweite Vertiefung 27 gegenüberliegen. Um eine Kopplung zwischen der Kederleiste 1 und dem Werkzeug 200 möglichst schnell und einfach herstellen zu können, ist der Koppelbereich 21 mit einem pilzkopfförmigen Querschnitt ausgebildet. Dieser ergibt sich insbesondere durch relativ zur Entnahmerichtung R1 ausgebildete Einführschrägen 30.

Schließlich zeigt Fig. 1 ein vorderes Ende des Werkzeugs 200, welches zur Entfernung der Kederleiste 1 aus der Rastausnehmung 101 mit dem Koppelbereich 21 des Überstandabschnitts der Kederleiste 1 gekoppelt ist. Das Werkzeug 200 verfügt über einen Schaftbereich 210 (nicht vollständig gezeigt in Fig. 1) und einen Koppelbereich 220 zur Kopplung mit dem Koppelbereich 21 der Kederleiste 1 bei deren Entfernung aus der Rastausnehmung 101 mittels einer Zugkraft Z in einer Zugrichtung R2. Wie man erkennt, ist die Zugrichtung R2 dabei parallel zur Entnahmerichtung R1 der Kederleiste 1. Dies stellt den Idealfall bei der Handhabe des Werkzeugs 200 durch eine ausführende Person, bzw. der Einstellung eines robotergeführten Werkzeugs 200 dar.

Der Koppelbereich 220 des Werkzeugs 200 weist ein erstes Koppelmittel 221 und ein zweites Koppelmittel 223 auf. Das erste Koppelmittel 221 bildet einen ersten Hinterschnitt 222 quer zur Zugrichtung R2 aus. Das zweite Koppelmittel 223 bildet einen zweiten Hinterschnitt 224 quer zur Zugrichtung R2 aus. Dabei liegen sich die Koppelmittel 221, 223 relativ zur Zugrichtung R2 gegenüber, hier insbesondere symmetrisch.

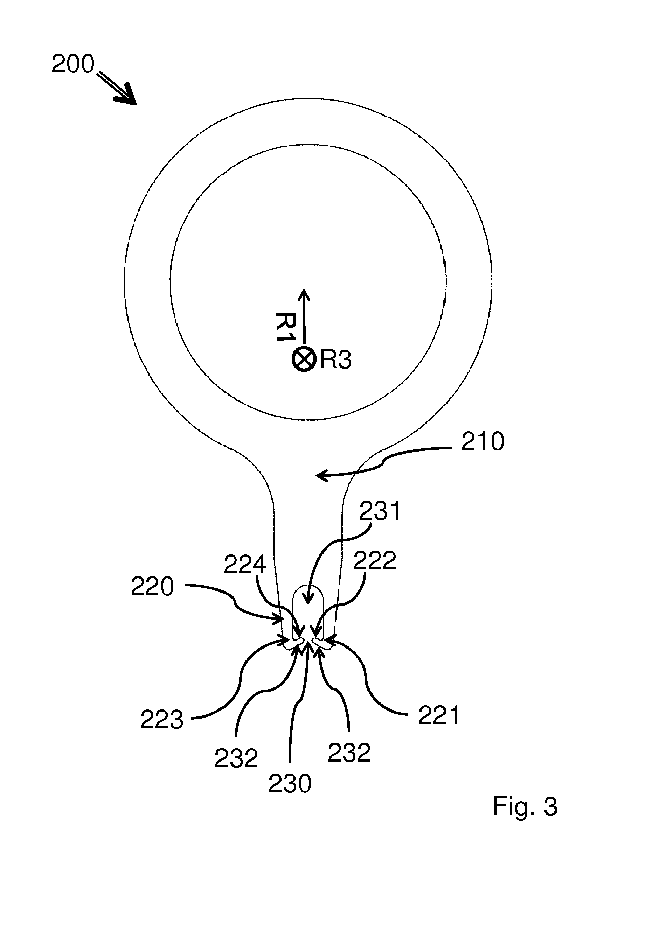

Eine mögliche Gestaltung des Schaftbereichs 210 des Werkzeugs 200 zeigt Fig. 3. Hier ist der Schaftbereich 210 als ringförmiger Griffbereich ausgebildet, der durch eine ausführende Person ge- bzw. durchgriffen werden kann.

Fig. 3 zeigt weiterhin das vordere Ende des Werkzeugs 200 aus Fig. 1. Wie man hier erkennt, ist zwischen dem ersten Koppelmittel 221 und dem zweiten Koppelmittel 223 stirnseitig zur Zugrichtung R2 eine schlitzförmige Aufnahmeöffnung 230 mit einem dahinterliegenden, sowie quer zur Zugrichtung R2 und relativ zur Aufnahmeöffnung 230 aufgeweiteten Aufnahmeraum 231 ausgebildet. Dabei ist der Aufnahmeraum 231 in einer Richtung R3 quer zur Zugrichtung R2 offen ausgebildet. In den Aufnahmeraum 231 kann der Überstandabschnitt 20, bzw. deren Koppelbereich 21 eingeführt werden. Hierfür weist die Aufnahmeöffnung 230 Einführschrägen 232 auf. Diese sind relativ zur Zugrichtung R2 schräg ausgerichtet.

Das gesamte Werkzeug 200 besteht in der gezeigten Ausführung aus Kunststoff. Dieses ist elastisch verformbar. Hierdurch sind das erste Koppelmittel 221 und das zweite Koppelmittel 223 relativ zueinander bewegbar. Bei einer Aufsteckbewegung des Werkzeugs 200 entgegen der Zugrichtung R2 korrespondieren die Einführschrägen 30 der Kederleiste 1 und die Einführschrägen 232 des Werkzeugs 200. Die Kederleiste 1, insbesondere dessen Koppelbereich 21, und das Werkzeug 200, insbesondere dessen Koppelbereich 220, verformen sich hierbei elastisch, bis die Koppelmittel 221, 223 des Werkzeugs 20 schließlich in die Vertiefungen 23, 27 des Koppelbereichs 21 des Überstandabschnitts 20 der Kederleiste 1 einrasten.

Alternativ und/oder ergänzend zur elastischen Verformung könnte das Werkzeug 200 auch mit einem Betätigungsmittel 240 ausgebildet werden, insbesondere als Zange oder Pinzette.

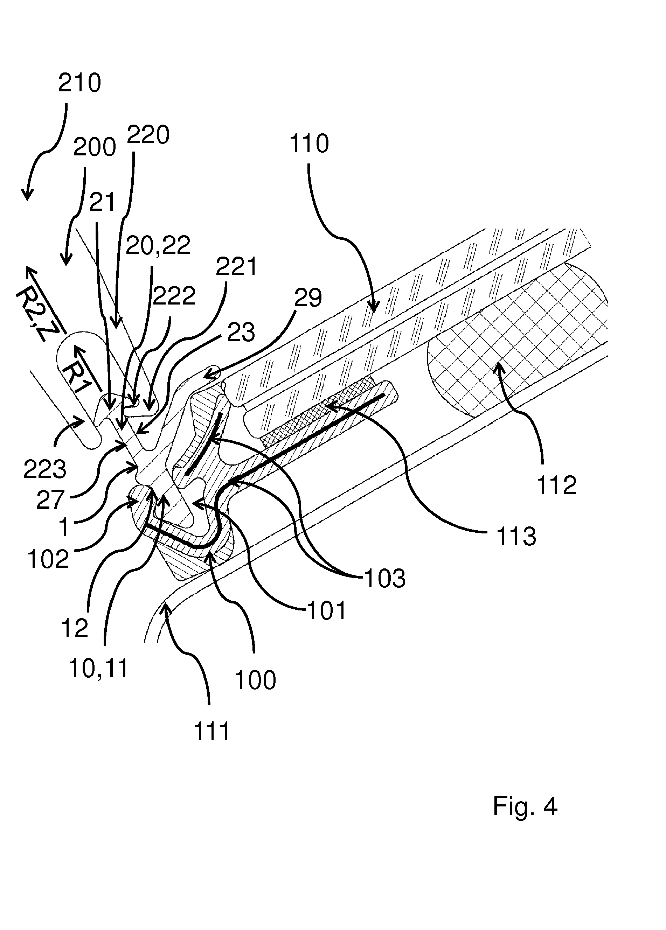

Fig. 4 zeigt einen Querschnitt durch eine Profilleiste 100 mit einer Kederleiste 1. Dabei unterscheidet sich die dargestellte Ausführungsform von der in den Fig. 1 und 2 dargestellten Variante durch zwei Merkmale.

Zum einen weist der Überstandabschnitt 20 einen Abdeckbereich 29 auf. Dieser erstreckt sich über die in Richtung Fahrzeugscheibe 110 weisende Oberfläche der Profilleiste 100. Hierdurch wird die Profilleiste 100 und die angrenzende Fahrzeugscheibe 110 in diesem Bereich geschützt. Entsprechend des Überstandabschnitts 20 ist dessen Abdeckbereich 29 Bestandteil des zweiten linearen Körpers 22. Er erstreckt sich über die gesamte Länge der Kederleiste 1.

Zum anderen ist das vordere Ende des Werkzeugs 200, insbesondere dessen Koppelbereich 220, abgewandelt. Der Koppelbereich 220 weist ein erstes Koppelmittel 221 und ein zweites Koppelmittel 223 auf. Das erste Koppelmittel 221 bildet wie in Fig.1 und 3 einen ersten Hinterschnitt 222 quer zur Zugrichtung R2 aus. Das zweite Koppelmittel 223 hingegen bildet keinen Hinterschnitt quer zur Zugrichtung R2 aus. Die Koppelmittel 221, 223 liegen sich relativ zur Zugrichtung R2 gegenüber. Die Zugkraft Z des Werkzeugs 200 wird folglich nur vom ersten Koppelmittel 221 auf die Kederleiste 1 übertragen. Das zweite Koppelmittel 223 verhindert dabei eine Bewegung des Koppelbereichs 21 des Überstandabschnitts 20 der Kederleiste 1 in einer Richtung quer Zugrichtung R2. Hierfür ist der zweite Koppelbereich 223 in Anlage mit dem Koppelbereich 21 des Überstandabschnitts 20 der Kederleiste 1. Die Kontaktfläche des Werkzeugs 200 ist in diesem Bereich weitestgehend parallel zur Zugrichtung R2 ausgebildet. Bei einem Aufstecken des Werkzeugs 200 muss so nur eine relativ kleine elastische Verformung der Koppelbereiche 21, 220 erfolgen. Um die elastische Verformung zu minimieren, kann das Werkzeug 200 schräg aus Richtung der Windschutzscheibe 110 aufgesteckt werden.

Sobald das erste Koppelmittel 221 in Eingriff mit der ersten Vertiefung 23 des Koppelbereichs 21 des Überstandabschnitts 20 der Kederleiste 1 ist, kann das Werkzeug 200 aufgerichtet werden, so dass die Zugrichtung R2 des Werkzeugs 200 parallel zur Entnahmerichtung R1 der Kederleiste 1 ist. Wird das Werkzeug 200 um 180° um die Zugrichtung R2 gedreht, kann das Werkzeug 200 von schräg unten aufgesteckt werden. Wenn das erste Koppelmittel 221 dann in Eingriff mit der zweiten Vertiefung 27 des Koppelbereichs 21 des Überstandabschnitts 20 der Kederleiste 1 ist, kann das Werkzeug 200 wiederum aufgerichtet werden.

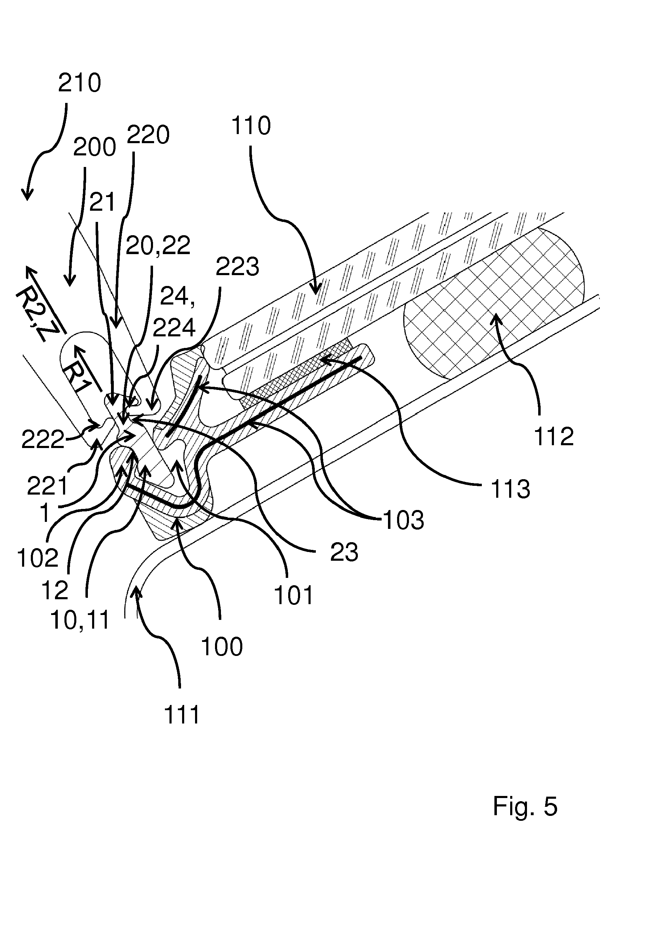

Ein sehr ähnlicher Effekt wird von einer Ausführung gemäß Fig. 5 erzielt. Diese Ausführung unterscheidet sich von der in den Fig. 1 bis 3 dargestellten Ausführungsform im Koppelbereich 21 des Überstandabschnitts 20 der Kederleiste 1. Zur Herstellung einer Kopplung mit dem Werkzeug 200 verfügt der in Fig. 5 gezeigte Koppelbereich 21 des Überstandabschnitts 20 der Kederleiste 1 über einen Querschnitt mit einer ersten Vertiefung 23. Diese bildet einen Hinterschnitt 24 quer zur Entnahmerichtung R1 aus. Hierfür ist die erste Vertiefung 23 in Entnahmerichtung R1 seitlich am Koppelbereich 21 angeordnet. Eine zweite Vertiefung wie in den Fig. 1 und 2 ist nicht vorgesehen.

Bei einem Aufstecken des Werkzeugs 200 muss wiederum nur eine relativ kleine elastische Verformung der Koppelbereiche 21, 220 erfolgen. Um die elastische Verformung zu minimieren, kann das Werkzeug 200 schräg aus Richtung der Windschutzscheibe 110 aufgesteckt werden. Sobald das erste Koppelmittel 221 in Eingriff mit der zweiten Vertiefung 27 des Koppelbereichs 21 des Überstandabschnitts 20 der Kederleiste 1 ist, kann das Werkzeug 200 aufgerichtet werden, so dass die Zugrichtung R2 des Werkzeugs 200 parallel zur Entnahmerichtung R1 der Kederleiste 1 ist.

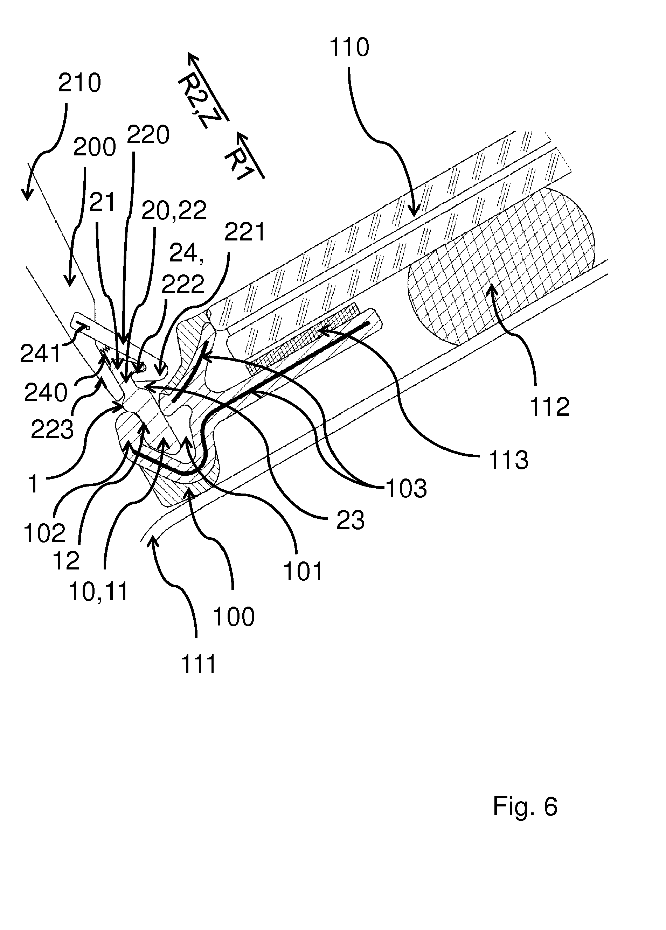

Die in Fig. 5 gezeigte Kederleiste 1 ist auch mittels eines Werkzeugs 200 gemäß Fig. 6 aus der Profilleiste 100 entfernbar. Das hier gezeigte Werkzeug 200 verfügt über einen Schaftbereich 210 und einen Koppelbereich 220 zur Kopplung mit dem Koppelbereich 21 der Kederleiste 1 bei deren Entfernung aus der Rastausnehmung 101 mittels einer Zugkraft Z in einer Zugrichtung R2. Wie man erkennt, ist die Zugrichtung R2 dabei parallel zur Entnahmerichtung R1 der Kederleiste 1.

Der Koppelbereich 220 weist ein erstes Koppelmittel 221 und ein zweites Koppelmittel 223 auf. Das erste Koppelmittel 221 bildet einen ersten Hinterschnitt 222 quer zur Zugrichtung R2 aus. Das zweite Koppelmittel 223 hingegen bildet keinen Hinterschnitt quer zur Zugrichtung R2 aus.

Die Koppelmittel 221, 223 liegen sich relativ zur Zugrichtung R2 gegenüber. Die Zugkraft Z des Werkzeugs 200 wird folglich nur vom ersten Koppelmittel 221 auf die Kederleiste 1 übertragen. Das zweite Koppelmittel 223 verhindert dabei eine Bewegung des Koppelbereichs 21 des Überstandabschnitts 20 der Kederleiste 1 in einer Richtung quer Zugrichtung R2. Hierfür ist der zweite Koppelbereich 223 in Anlage mit dem Koppelbereich 21 des Überstandabschnitts 20 der Kederleiste 1. Die Kontaktfläche des Werkzeugs 200 ist in diesem Bereich weitestgehend parallel zur Zugrichtung R2 ausgebildet.

Das erste Koppelmittel 221 ist drehbar in einem Drehpunkt 241 zum zweiten Koppelmittel 223 gelagert. Dabei wird das erste Koppelmittel 221 durch ein als Feder ausgebildetes Betätigungsmittel 240 in Richtung des zweiten Koppelmittels 223 kraftbeaufschlagt. Mithin erzeugt das Werkzeug 200 in seinem Koppelbereich 220 eine Klemmkraft.

Bei einem Aufstecken des Werkzeugs 200 wird das erste Koppelmittel 221 durch Einführschrägen am ersten Koppelmittel 221 und am Koppelbereich 21 des Überstandabschnitts 20 der Kederleiste 1 ausgelenkt und rastet schließlich in der ersten Vertiefung 23 des Koppelbereichs 21 des Überstandabschnitts 20 der Kederleiste 1 ein.

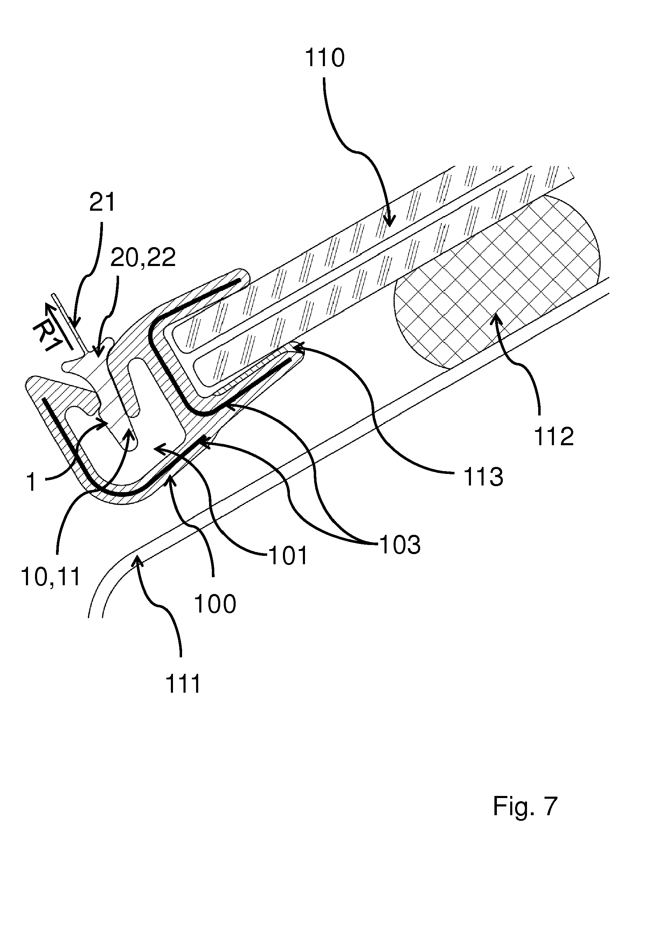

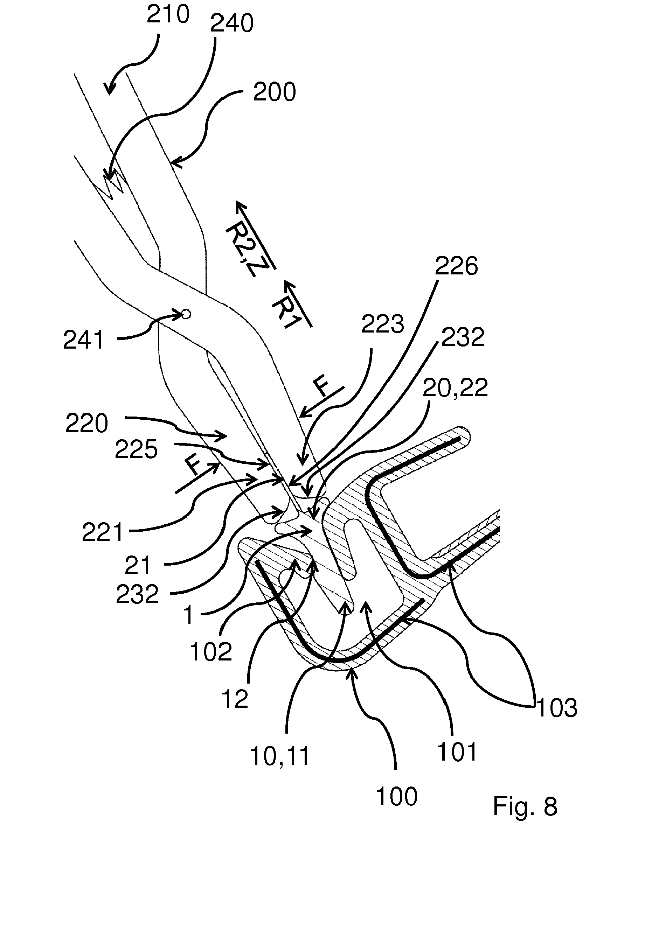

Die Fig. 7 und 8 zeigen eine weitere Ausbildung einer Profilleiste 100 mit einer Kederleiste 1 in einer Querschnittsansicht. Die Kederleiste 1 ist vorübergehend in eine in der Profilleiste 100 ausgebildete Rastausnehmung 101 eingesetzt. Dabei ist die Profilleiste 100 zum Verbinden einer Fahrzeugscheibe 110 mit einer Wasserkastenabdeckung vorgesehen, wobei die Wasserkastenabdeckung eine Rippe aufweist, die nach dem Entfernen der Kederleiste 1 kraft- und/oder formschlüssig in der Rastausnehmung 101 festlegbar ist.

Wie dargestellt, ist die Profilleiste 100 aus unterschiedlichen Materialien hergestellt. Insbesondere verfügt die Profilleiste 100 über innenliegende Versteifungselemente 103. Außerdem verfügt sie über ein Haltemittel 113, welcher aus einem weichen Material besteht. Mit einem U-förmigen Abschnitt der Profilleiste 100 ist letztere auf die Unterkante der Fahrzeugscheibe 110 aufgesteckt. Einer der U-Schenkel weist dabei innenliegend das Haltemittel 113 auf und fixiert durch eine Klemmkraft des U-förmigen Abschnitts die Profilleiste 100 an der Fahrzeugscheibe 110. Dabei ist die gezeigte Profilleiste 100 inklusive des Haltemittels 113 und der Versteifungselemente 103 in einem Coextrusionsverfahren gefertigt. Ferner ist die Fahrzeugscheibe 110 über ein Befestigungsmittel 112 mit einer Karosserie 111 eines Fahrzeugs gekoppelt. Dieses Befestigungsmittel 112 ist als Verklebung ausgeführt.

Die Kederleiste 1 weist einen Kernabschnitt 10 und einen Überstandabschnitt 20 auf, wobei der Kernabschnitt 10 innerhalb der Rastausnehmung 101 kraft- und/oder formschlüssig festgelegt ist, und wobei der Überstandabschnitt 20 aus der Rastausnehmung 101 der Profilleiste 100 herausragt, wenn die Kederleiste 1 wie in den Fig. 7 und 8 in die Rastausnehmung 101 eingesetzt ist.

Der Kernabschnitt 10 der Kederleiste 1 hat einen Querschnitt mit einer Rastvertiefung 12 zur Aufnahme eines Rastelements 102 der Profilleiste 100. Dieses Rastelement 102 ist in der Rastausnehmung 101 der Profilleiste 100 angeordnet, bzw. von der Profilleiste 100 selbst ausgebildet. Hierdurch ist die Kederleiste 1 in der Profilleiste 100 festgelegt. Durch eine elastische Verformung der Kederleiste 1 und/oder der Profilleiste 100 kann die Kederleiste 1 in einer Entnahmerichtung R1 aus der Profilleiste 100 entnommen/gezogen werden. Insbesondere ist die Rastvertiefung 12 in Entnahmerichtung R1 seitlich am Kernabschnitt 10 der Kederleiste 1 angeordnet, wobei die Entnahmerichtung R1 quer zur Profilleiste 100 ausgerichtet und aus der Rastausnehmung 101 heraus zeigend ist. Der Kernabschnitt 10 der Kederleiste 1 ist als ein erster linearer Körper 11 ausgebildet. Hierfür wurde er extrudiert. Anschließend wurde er entsprechend der geforderten Länge abgelängt.

Weiterhin hat der Überstandabschnitt 20 einen Koppelbereich 21 für ein Werkzeug 200. Dieser erstreckt sich über die gesamte Länge des Überstandabschnitts 20. Hierfür ist der Überstandabschnitt 20 als zweiter linearer Körper 22 ausgebildet. Dieser erstreckt sich über die gesamte Länge des Kernabschnitts 10. Auch der zweite lineare Körper 22 ist im Extrusionsverfahren hergestellt. Insbesondere ist der zweite lineare Körper 22 und der erste lineare Körper 11 einteilig ausgebildet, insbesondere gemeinsam extrudiert. Der Koppelbereich 21 erstreckt sich daher entsprechend des Überstandabschnitts 20 über die gesamte Länge der Kederleiste 1.

Zur Herstellung einer Kopplung mit dem Werkzeug 200 verfügt der Koppelbereich 21 des Überstandabschnitts 20 der Kederleiste 1 über zwei sich gegenüberliegende Angriffsflächen für das Werkzeug 200. In der gezeigten Darstellung sind diese Angriffsflächen parallel zueinander. Außerdem verlaufen die Angriffsflächen parallel zur Entnahmerichtung R1. Die Länge des Koppelbereichs 21 in der Entnahmerichtung R1 ist dabei geringer als die Länge des Kernabschnitts 10 der Kederleiste 1.

Schließlich zeigt Fig. 8 das Werkzeug 200, welches als Zange ausgebildet und zur Entfernung der Kederleiste 1 aus der Rastausnehmung 101 mit dem Koppelbereich 21 des Überstandabschnitts der Kederleiste 1 gekoppelt ist. Das Werkzeug 200 verfügt über einen Schaftbereich 210 und einen Koppelbereich 220 zur Kopplung mit dem Koppelbereich 21 der Kederleiste 1 bei deren Entfernung aus der Rastausnehmung 101 mittels einer Zugkraft Z in einer Zugrichtung R2. Wie man erkennt, ist die Zugrichtung R2 dabei parallel zur Entnahmerichtung R1 der Kederleiste 1. Dies stellt den Idealfall bei der Handhabe des Werkzeugs 200 durch eine ausführende Person dar. Hierfür bildet der Schaftbereich 210 einen Griffbereich für eine Person aus. Der Zangengriffartige Schaftbereich 210 liegt dabei auf einer ersten Seite eines Drehpunktes 241 und über Kreuz geführte Fortsätze des Schaftbereichs 210 bilden den Koppelbereich 220 des Werkzeugs 200 aus.

Der Koppelbereich 220 des Werkzeugs 200 weist ein erstes Koppelmittel 221 und ein zweites Koppelmittel 223 auf. Das erste Koppelmittel 221 hat dabei eine in Richtung des Koppelbereichs 21 des Überstandabschnitts 20 der Kederleiste 1 ausgerichtete erste Reibfläche 225. Gegenüberliegend bildet das zweite Koppelmittel 223 eine zweite Reibfläche 226 aus. Die beiden Reibflächen 225, 226 sind dabei in der gezeigten Koppelstellung mit der Kederleiste 1 parallel zueinander ausgerichtet.

Um eine Kopplung zwischen der Kederleiste 1, insbesondere deren Koppelbereich 21, und dem Werkzeug 200 möglichst schnell und einfach herstellen zu können, verfügt das Werkzeug 200 über Einführschrägen 232. Zusätzlich ist ein als Feder ausgebildetes Betätigungsmittel 240 vorgesehen, welches die Koppelmittel 221, 223 auseinander drückt. Das Betätigungsmittel 240 ist hierfür im Schaftbereich 210, insbesondere zwischen den zwei Zangengriffelementen, angeordnet. Durch eine Kraft einer ausführenden Person entgegen der Kraft des Betätigungsmittels 240, können die Koppelmittel 221, 223 aufeinander zu bewegt werden. Schließlich ist durch die Kraft der ausführenden Person eine Klemmkraft F erzeugbar, so dass eine reibschlüssige Verbindung zwischen dem Koppelbereich 21 der Kederleiste 1 und den Koppelmitteln 221, 223 entsteht. Anschließend kann eine Zugkraft Z vom Werkzeug 200 auf die Kederleiste 1 übertragen werden. Mit Ausnahme des Betätigungsmittels 240 besteht das Werkzeug 200 aus Kunststoff.

Weitere Varianten der Kederleiste 1, der Profilleiste 100 und des Werkzeugs 200 gemäß der Figuren 1 bis 8 sind durch Kombination der vorhergehenden Ausführungsformen ausbildbar. Insbesondere kann der Überstandabschnitte 20 jeweils einen Abdeckbereich 29 aufweisen.

Weiterhin könnten die Werkzeuge 200 jeweils mit einem Betätigungsmittel 240 ausgestattet sein, so dass elastische Verformungen beim Aufstecken minimiert sind. Hierdurch kann zudem eine Klemmkraft/Spreizkraft vom Werkzeug 200 auf die Kederleiste 1 aufgebracht werden, wodurch die übertragbare Zugkraft Z groß ist. Dies ist insbesondere bei einer Ausbildung des Werkzeugs 200 als Pinzette oder Zange der Fall. Auch sind Kombinationen dahingehend möglich, dass das Werkzeug ein oder zwei Koppelmittel 221, 223 aufweist, wobei entweder ein Koppelmittel 221 einen Hinterschnitt 222 oder auch das zweite Koppelmittel 223 einen zweiten Hinterschnitt 224 aufweisen. Der gegenstückige Koppelbereich 21 des Überstandabschnitts 20 der Kederleiste 1 kann unabhängig vom Werkzeug 200 eine Vertiefung 23 oder auch eine zweite Vertiefung 27 aufweisen. Schließlich sind die Werkzeuge auch mit unterschiedlichen Schaftbereichen 210 ausstattbar, insbesondere mit Griffbereichen für ausführende Personen oder Anbindungsbereichen für einen Roboter.

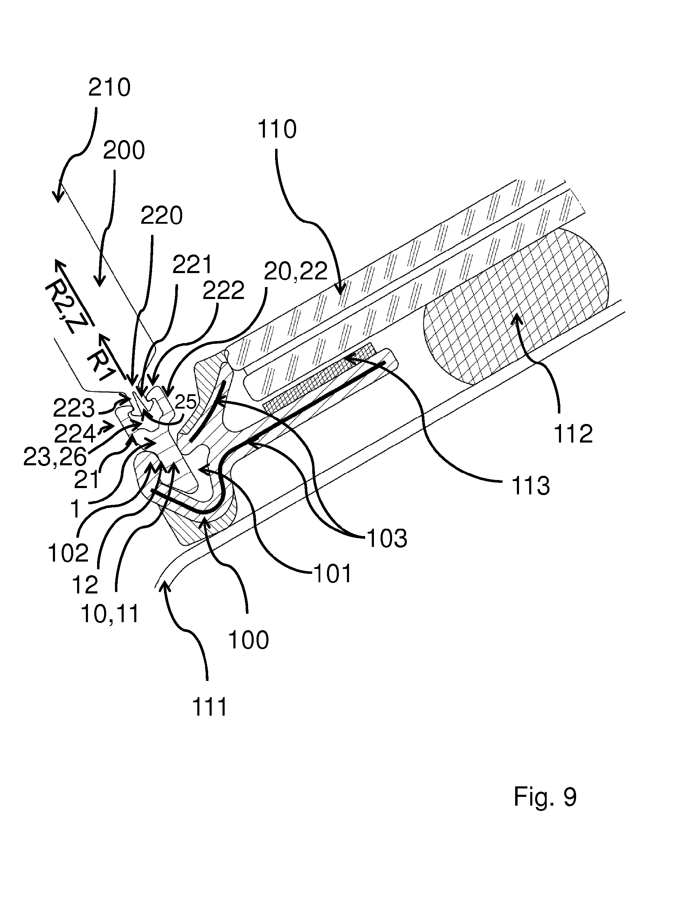

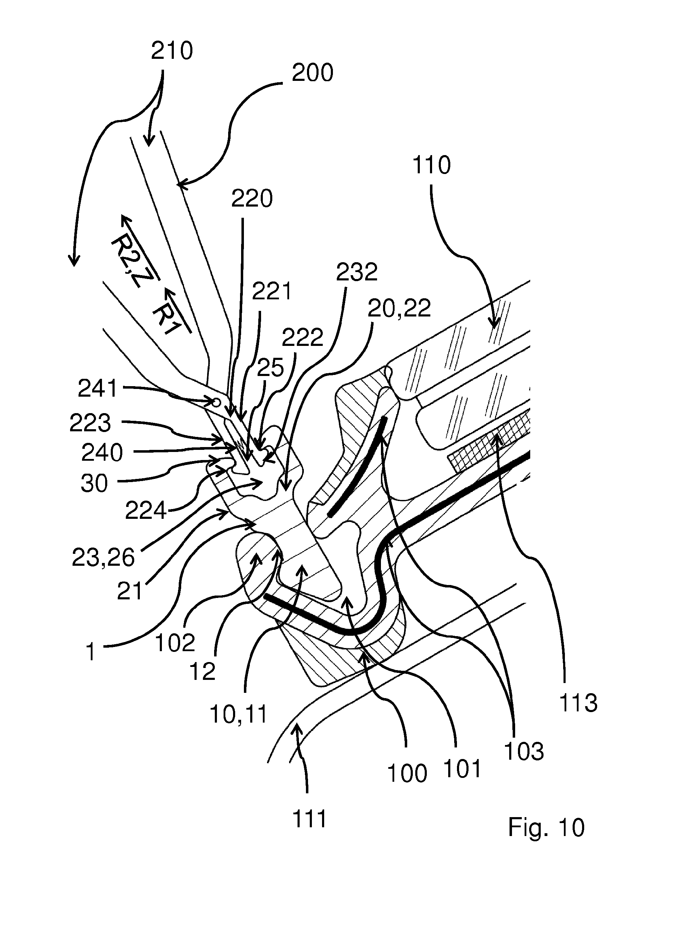

Die Fig. 9 und 10 zeigen jeweils einen Querschnitt durch eine Profilleiste 100 mit einer Kederleiste 1, wobei die Kederleiste 1 einen Koppelbereich 21 mit einem Querschnitt mit einer stirnseitigen ersten Vertiefungen 23 zur Kopplung mit einem Werkzeug 200 aufweist. Die Kederleiste 1 ist vorübergehend in eine in der Profilleiste 100 ausgebildete Rastausnehmung 101 eingesetzt. Dabei ist die Profilleiste 100 zum Verbinden einer Fahrzeugscheibe 110 mit einer Wasserkastenabdeckung vorgesehen, wobei die Wasserkastenabdeckung eine Rippe aufweist, die nach dem Entfernen der Kederleiste 1 kraft- und/oder formschlüssig in der Rastausnehmung 101 festlegbar ist.

Wie dargestellt, ist die Profilleiste 100 aus unterschiedlichen Materialien hergestellt. Insbesondere in Richtung einer Karosserie 111 und der Fahrzeugscheibe 110 sind weichere Bereiche vorgesehen, mit denen sich die Profilleiste 100 abstützt. Zudem verfügt die Profilleiste 100 über innenliegende Versteifungselemente 103. Die gezeigte Profilleiste 100 ist in einem Coextrusionsverfahren hergestellt. Über ein Haltemittel 113 ist die Profilleiste 100 an der Fahrzeugscheibe 110 festgelegt. Dieses ist insbesondere als zweiseitiger Klebestreifen ausgebildet. Die Fahrzeugscheibe 110 wiederum ist über ein Befestigungsmittel 112 mit der Karosserie 111 gekoppelt. Dieses Befestigungsmittel 112 ist als Verklebung, bzw. Kleberaupe ausgeführt.

Wie man erkennt, weist die Kederleiste 1 einen Kernabschnitt 10 und einen Überstandabschnitt 20 auf, wobei der Kernabschnitt 10 innerhalb der Rastausnehmung 101 kraft- und/oder formschlüssig festgelegt ist, und wobei der Überstandabschnitt 20 aus der Rastausnehmung 101 der Profilleiste 100 herausragt, wenn die Kederleiste 1 wie dargestellt in die Rastausnehmung 101 eingesetzt ist.

Der Kernabschnitt 10 der Kederleiste 1 hat einen Querschnitt mit einer Rastvertiefung 12 zur Aufnahme eines Rastelements 102 der Profilleiste 100. Dieses Rastelement 102 ist in der Rastausnehmung 101 der Profilleiste 100 angeordnet, bzw. von letzterer selbst ausgebildet. Hierdurch ist die Kederleiste 1 in der Profilleiste 100 festgelegt. Durch eine elastische Verformung der Kederleiste 1 und/oder der Profilleiste 100 kann die Kederleiste 1 in einer Entnahmerichtung R1 aus der Profilleiste 100 entnommen/gezogen werden. Insbesondere ist die Rastvertiefung 12 in Entnahmerichtung R1 seitlich am Kernabschnitt 10 der Kederleiste 1 angeordnet, wobei die Entnahmerichtung R1 quer zur Profilleiste 100 ausgerichtet und aus der Rastausnehmung 101 heraus zeigend ist. Der Kernabschnitt 10 der Kederleiste 1 ist als ein erster linearer Körper 11 ausgebildet. Hierfür wurde er extrudiert. Anschließend wurde er entsprechend der geforderten Länge abgelängt.

Weiterhin hat der Überstandabschnitt 20 einen Koppelbereich 21 für ein Werkzeug 200. Dieser erstreckt sich über die gesamte Länge des Überstandabschnitts 20. Hierfür ist der Überstandabschnitt 20 als zweiter linearer Körper 22 ausgebildet. Er erstreckt sich über die gesamte Länge der Kederleiste 1. Auch der zweite lineare Körper 22 ist im Extrusionsverfahren hergestellt. Dabei sind der zweite lineare Körper 22 und der erste lineare Körper 11 einteilig ausgebildet, insbesondere gemeinsam extrudiert. Der Koppelbereich 21 erstreckt sich daher entsprechend des Überstandabschnitts 20 über die gesamte Länge der Kederleiste 1.

Zur Herstellung einer Kopplung mit dem Werkzeug 200 verfügt der Koppelbereich 21 des Überstandabschnitts 20 der Kederleiste 1 über einen Querschnitt mit einer ersten Vertiefung 23. Diese erste Vertiefung 23 ist in Entnahmerichtung R1 stirnseitig am Koppelbereich 21 angeordnet. Sie hat einen Querschnitt mit einer schlitzförmigen Eingriffsöffnung 25 und mit einem dahinterliegenden, quer zur Entnahmerichtung R1 und relativ zur Eingriffsöffnung aufgeweiteten Hohlraum 26.

Um eine Kopplung zwischen der Kederleiste 1 und dem Werkzeug 200 möglichst schnell und einfach herstellen zu können, hat der Koppelbereich 21 relativ zur Entnahmerichtung R1 ausgebildete Einführschrägen 30.

Schließlich zeigen die Fig. 9 und 10 zwei unterschiedliche Werkzeuge 200, welche zur Entfernung der Kederleiste 1 aus der Rastausnehmung 101 mit dem Koppelbereich 21 des Überstandabschnitts 21 der Kederleiste 1 gekoppelt sind. Beide Werkzeuge 200 verfügen über einen Schaftbereich 210 (nicht vollständig gezeigt) und einen Koppelbereich 220 zur Kopplung mit dem Koppelbereich 21 der Kederleiste 1 bei deren Entfernung aus der Rastausnehmung 101 mittels einer Zugkraft Z in einer Zugrichtung R2.

Der Koppelbereich 220 der Werkzeuge 200 weist jeweils ein erstes Koppelmittel 221 und ein zweites Koppelmittel 223 auf. Das erste Koppelmittel 221 bildet einen ersten Hinterschnitt 222 quer zur Zugrichtung R2 aus. Das zweite Koppelmittel 223 bildet einen zweiten Hinterschnitt 224 quer zur Zugrichtung R2 aus. Dabei liegen sich die Koppelmittel 221, 223 relativ zur Zugrichtung R2 symmetrisch gegenüber.

Das Werkzeug gemäß Fig. 9 hat im Schaftbereich 210 einen einfachen Handgriff für eine Person. Weiterhin sind die Koppelmittel 221, 223 entlang der Zugrichtung R2 durch einen Schlitz voneinander getrennt. Somit können sich die Koppelmittel 221, 223 elastisch zueinander bewegen. Ferner weisen die Koppelmittel 221, 223 relativ zur Zugrichtung R1 und zur Eingriffsöffnung 25 Einführschrägen auf. Beim Einschieben des Werkzeugs 200, bzw. dessen Koppelbereich 220, in den Hohlraum 26 der ersten Vertiefung 23 werden die Koppelmittel 221, 223 aufeinander zubewegt. Gleichzeitig weitet sich die Eingriffsöffnung 25 der ersten Vertiefung 23 auf. Schließlich rasten die Koppelmittel 221, 223 des Werkzeugs 200 im Hohlraum 26 der Kederleiste 1 ein. Anschließend kann die Kederleiste 1 durch Aufbringen einer Zugkraft Z in Zugrichtung R2 aus der Profilleiste 100 gezogen werden.

Das Werkzeug gemäß **Fig. 10** hat einen Schaftbereich 210 mit zwei Handgriffen, die in einem Drehpunkt 241 entsprechend einer Zange drehend zueinander gelagert sind. Die Koppelmittel 221, 223 sind über Kreuz an Fortsätzen der Handgriffe angeordnet. Somit können die Koppelmittel 221, 223 von einer ausführenden Person relativ zueinander bewegt werden, insbesondere aufeinander zu. Entgegen dieser Betätigungsrichtung werden die Koppelmittel 221, 223 von einem Betätigungsmittel 240, insbesondere einer Feder, auseinander gedrückt. Weiterhin weisen die Koppelmittel 221, 223 relativ zur Zugrichtung R1 und zur Eingriffsöffnung 25 Einführschrägen 232 auf. Beim Einschieben des Werkzeugs 200, bzw. dessen Koppelbereich 220, in den Hohlraum 26 der ersten Vertiefung 23 werden die Koppelmittel 221, 223 durch Betätigung der Handgriffe durch die ausführenden Person aufeinander zubewegt. Anschließend kann das Werkzeug 200 in den Hohlraum 26 der Kederleiste 1 eingeschoben werden, insbesondere ohne dass das Werkzeug 200 oder die Kederleiste 1 elastisch verformt werden. Nach Entlastung des Schaftbereichs 220 durch die ausführende Person rasten die Koppelmittel 221, 223 bedingt durch das Betätigungsmittel 240 des Werkzeugs 200 im Hohlraum 26 der Kederleiste 1 ein. Danach kann die Kederleiste 1 durch Aufbringen einer Zugkraft Z in Zugrichtung R2 aus der Profilleiste 100 gezogen werden.

Das Werkzeug ist auch ohne eine über Kreuz Führung im Drehpunkt 241 ausbildbar. Hierdurch entfernen sich die Koppelmittel 221, 223 bei einer Betätigung durch eine ausführende Person. Das Betätigungsmittel 240 bewegt die Koppelmittel 221, 223 in diesem Fall aufeinander zu. Anstatt einer personengeführten Ausbildung ist das Werkzeug 200 auch robotergeführt umsetzbar.

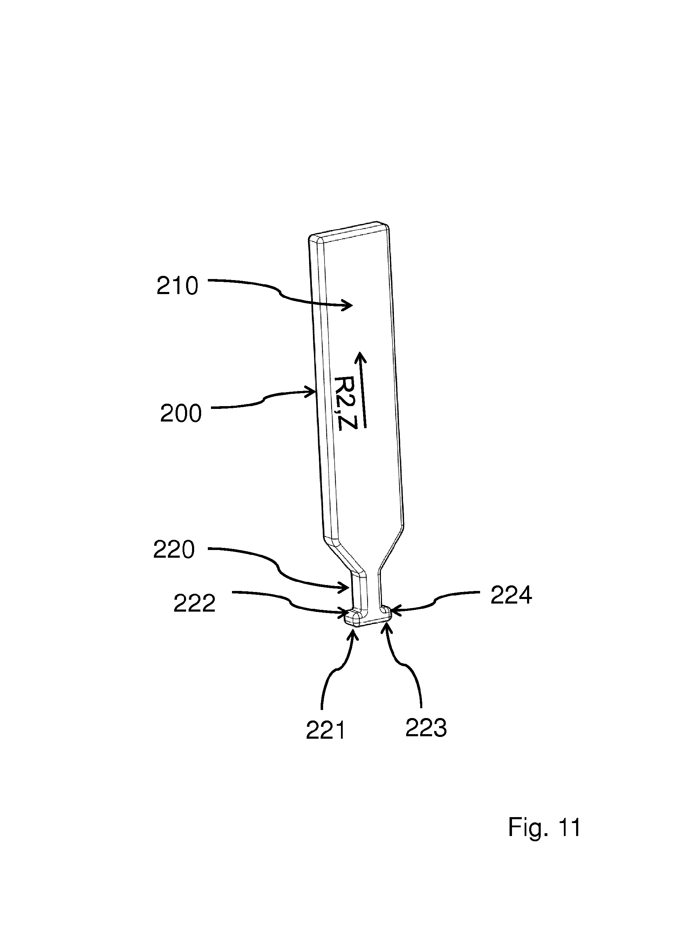

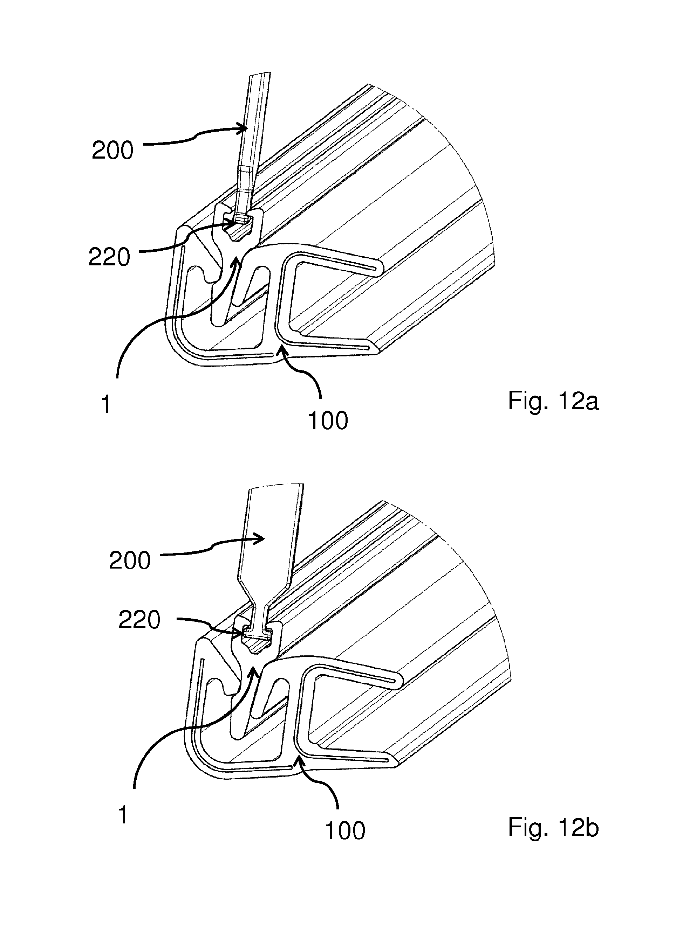

Ein weiteres Werkzeug 200, welches sich zur Entfernung einer Kederleiste 1 entsprechend der Fig. 9 und 10 aus einer Profilleiste 100 geeignet ist, zeigen die Fig. 11, 12a und 12b. Die Profilleiste 100 entspricht hier den Fig. 7 und 8. Wie in den Fig. 11, 12a und 12b erkennbar ist, verfügt das Werkzeug 200 ebenfalls über einen Schaftbereich 210 und einen Koppelbereich 220. Dabei bildet der Schaftbereich 210 einen Handgriff für eine Person aus. Schaftbereich 210 könnte jedoch auch mit einem Roboter gekoppelt werden, so dass das Werkzeug 200 robotergeführt ausbildbar ist.

Der Koppelbereich 220 hat eine T-förmige Grundform. Hierfür weist der Koppelbereich 220 ein erstes Koppelmittel 221 und ein zweites Koppelmittel 223 auf. Das zweite Koppelmittel 223 ist dem ersten Koppelmittel 221 gegenüberliegend angeordnet. Zusätzlich sind das erste Koppelmittel 221 und das zweite Koppelmittel 223 rückseitig zueinander ausgerichtet. Das erste Koppelmittel 221 bildet einen ersten Hinterschnitt 222 und das zweite Koppelmittel 223 einen zweiten Hinterschnitt 224 quer zur Zugrichtung R2 aus. Weiterhin ist der T-förmige Koppelbereich 220 flach ausgebildet. Insbesondere ist dessen Tiefe ungefähr so groß wie die Breite der Eingriffsöffnung 25 der ersten Vertiefung 23 des Koppelbereichs 21 des Überstandabschnitts 20 der Kederleiste 1. Ferner ist das gesamte Werkzeug 200 aus Kunststoff ausgebildet.

Wie in Fig. 12a dargestellt, wird das Werkzeug 200 durch die Eingriffsöffnung 25 in den Hohlraum 26 eingeführt, indem die schmale Seite des Koppelbereichs 220 parallel zur Eingriffsöffnung 25 ausgerichtet wird. Anschließend wird das Werkzeug 200 um 90° um die Zugrichtung R2 gedreht. Es entsteht die in Fig. 12b gezeigte Koppelstellung. Hierbei greifen die Koppelmittel 221, 223 in den aufgeweiteten Hohlraum 26 ein. Anschließend kann die Kederleiste 1 mittels einer Zugkraft Z in einer Zugrichtung R2 aus der Rastausnehmung 101 der Profilleiste 100 entfernt werden.

Die Erfindung ist nicht auf eine der vorbeschriebenen Ausführungsformen beschränkt, sondern in vielfältiger Weise abwandelbar.

Sämtliche aus den Ansprüchen, der Beschreibung und den Zeichnungen hervorgehenden Merkmale und Vorteile, einschließlich konstruktiver Einzelheiten, räumlicher Anordnungen und Verfahrensschritte, können sowohl für sich als auch in den verschiedensten Kombinationen erfindungswesentlich sein.

### Bezugszeichenliste

- 1: Kederleiste

- 10: Kernabschnitt
- 11: erster linearer Körper
- 12: Rastvertiefung

- 20: Überstandabschnitt
- 21: Koppelbereich
- 22: zweiter linearer Körper
- 23: erste Vertiefung
- 24: Hinterschnitt
- 25: Eingriffsöffnung
- 26: Hohlraum
- 27: zweite Vertiefung
- 28: Hinterschnitt
- 29: Abdeckbereich
- 30: Einführschräge

- 100: Profilleiste
- 101: Rastausnehmung
- 102: Rastelement
- 103: Versteifungselement

- 110: Fahrzeugscheibe
- 111: Karosserie
- 112: Befestigungsmittel
- 113: Haltemittel

- 200: Werkzeug

- 210: Schaftbereich

- 220: Koppelbereich
- 221: erstes Koppelmittel
- 222: erster Hinterschnitt
- 223: zweites Koppelmittel
- 224: zweiter Hinterschnitt
- 225: erste Einführschräge
- 226: zweite Einführschräge

- 230: Aufnahmeöffnung
- 231: Aufnahmeraum
- 232: Einführschräge

- 240: Betätigungsmittel
- 241: Drehpunkt

- F: Klemmkraft

- R1: Entnahmerichtung
- R2: Zugrichtung
- R3: Richtung

- Z: Zugkraft

## Patentansprüche

1. Kederleiste (1), die vorübergehend in eine in einer Profilleiste (100) ausgebildete Rastausnehmung (101) einsetzbar ist, wobei die Profilleiste (100) zum Verbinden einer Fahrzeugscheibe (110) mit einer Wasserkastenabdeckung vorgesehen ist, und wobei die Wasserkastenabdeckung eine Rippe aufweist, die nach dem Entfernen der Kederleiste (1) kraft- und/oder formschlüssig in der Rastausnehmung (101) festlegbar ist, wobei die Kederleiste (1) einen Kernabschnitt (10) und einen Überstandabschnitt (20) aufweist, wobei der Kernabschnitt (10) innerhalb der Rastausnehmung (101) kraft- und/oder formschlüssig festlegbar ist, und wobei der Überstandabschnitt (20) aus der Rastausnehmung (101) der Profilleiste (100) herausragt, wenn die Kederleiste (1) in die Rastausnehmung (101) eingesetzt ist, **dadurch gekennzeichnet, dass** der Überstandabschnitt (20) einen Koppelbereich (21) für ein Werkzeug (200) aufweist, wobei sich der Koppelbereich (21) zumindest abschnittsweise über die Länge des Überstandabschnitts (20) erstreckt.

2. Kederleiste (1) nach Anspruch 1, **dadurch gekennzeichnet, dass** der Kernabschnitt (10) ein erster linearer Körper (11) ist.

3. Kederleiste (1) nach einem der vorhergehenden Ansprüche, **dadurch gekennzeichnet, dass** diese eine Entnahmerichtung (R1) aufweist, welche quer zur Profilleiste (100) ausgerichtet und aus der Rastausnehmung (101) heraus zeigend ist.

4. Kederleiste (1) nach Anspruch 3, **dadurch gekennzeichnet, dass** der Koppelbereich (21) einen Querschnitt mit einer ersten Vertiefung (23) zur Kopplung mit dem Werkzeug (200) aufweist, wobei die erste Vertiefung (23) insbesondere einen Hinterschnitt (24) quer zur Entnahmerichtung (R1) aufweist.

5. Kederleiste (1) nach Anspruch 4, **dadurch gekennzeichnet, dass** die erste Vertiefung (23) in Entnahmerichtung (R1) seitlich am Koppelbereich (21) angeordnet ist.

6. Kederleiste (1) nach einem der Ansprüche 4 oder 5, **dadurch gekennzeichnet, dass** der Koppelbereich (21) einen Querschnitt mit einer zweiten Vertiefung (27) zur Kopplung mit dem Werkzeug (200) aufweist, wobei die zweite Vertiefung (27) insbesondere der ersten Vertiefung (23) gegenüberliegend angeordnet ist.

7. Kederleiste (1) nach Anspruch 4, **dadurch gekennzeichnet, dass** die erste Vertiefung (23) in Entnahmerichtung (R1) stirnseitig am Koppelbereich (21) angeordnet ist.

8. Kederleiste (1) nach Anspruch 7, **dadurch gekennzeichnet, dass** die erste Vertiefung (23) einen Querschnitt mit einer schlitzförmigen Eingriffsöffnung (25) und mit einem dahinterliegenden, quer zur Entnahmerichtung (R1) und relativ zur Eingriffsöffnung (25) aufgeweiteten Hohlraum (26) umfasst.

9. Werkzeug (200) zur Entfernung einer Kederleiste (1) aus einer Rastausnehmung (101) einer Profilleiste (100) nach einem der Ansprüche 1 bis 8, mit einem Schaftbereich (210) und mit einem Koppelbereich (220), der mit dem Koppelbereich (21) der Kederleiste (1) bei deren Entfernung aus der Rastausnehmung (101) mittels einer Zugkraft (Z) in einer Zugrichtung (R2) koppelbar ist.

10. Werkzeug (200) nach Anspruch 9, **dadurch gekennzeichnet, dass** dessen Koppelbereich (220) ein erstes Koppelmittel (221) aufweist, wobei das erste Koppelmittel (221) des Koppelbereichs (220) des Werkzeugs (200) insbesondere einen ersten Hinterschnitt (222) quer zur Zugrichtung (R2) ausbildet.

11. Werkzeug (200) nach einem der Ansprüche 9 oder 10, **dadurch gekennzeichnet, dass** dessen Koppelbereich (220) ein zweites Koppelmittel (223) aufweist, wobei das zweite Koppelmittel (223) des Koppelbereichs (220) des Werkzeugs (200) insbesondere einen zweiten Hinterschnitt (224) quer zur Zugrichtung (R2) ausbildet.

12. Werkzeug (200) nach Anspruch 11, **dadurch gekennzeichnet, dass** das zweite Koppelmittel (223) dem ersten Koppelmittel (221) gegenüberliegend angeordnet ist.

13. Werkzeug (200) nach einem der Ansprüche 11 oder 12, **dadurch gekennzeichnet, dass** das erste Koppelmittel (221) und das zweite Koppelmittel (223) durch ein Betätigungsmittel (240) relativ zueinander bewegbar sind.

14. Werkzeug (200) nach einem der Ansprüche 11 bis 13, **dadurch gekennzeichnet, dass** zwischen dem ersten Koppelmittel (221) und dem zweiten Koppelmittel (223) stirnseitig zur Zugrichtung (R2) eine schlitzförmige Aufnahmeöffnung (230) mit einem dahinterliegenden, sowie quer zur Zugrichtung (R2) und relativ zur Aufnahmeöffnung (230) aufgeweiteten Aufnahmeraum (231) ausgebildet ist, wobei der Aufnahmeraum (231) in einer Richtung (R3) quer zur Zugrichtung (R2) offen ausgebildet ist wobei die Aufnahmeöffnung (230) insbesondere eine Einführschräge (232) aufweist.

15. Werkzeug (200) nach einem der Ansprüche 11 bis 14, **dadurch gekennzeichnet, dass** das erste Koppelmittel (221) und das zweite Koppelmittel (223) rückseitig zueinander ausgerichtet sind und der Koppelbereich (220) des Werkzeugs (200) eine T-Form oder Pilzform ausbildet.
